(19) Europäisches Patentamt
European Patent Office
Office européen des brevets

(11) EP 4 074 741 B1

(12) **EUROPEAN PATENT SPECIFICATION**

(45) Date of publication and mention of the grant of the patent:
**09.10.2024 Bulletin 2024/41**

(21) Application number: **21853306.5**

(22) Date of filing: **04.08.2021**

(51) International Patent Classification (IPC):
***C08F 236/10*** *(2006.01)* ***C08F 8/40*** *(2006.01)*
***C08F 8/32*** *(2006.01)* ***C08F 2/44*** *(2006.01)*
***C08K 3/36*** *(2006.01)* ***C08K 3/04*** *(2006.01)*
***C08L 9/06*** *(2006.01)*

(52) Cooperative Patent Classification (CPC):
(C-Sets available)
**C08L 9/06; C08C 19/22; C08C 19/25; C08F 2/44; C08F 4/48; C08F 236/10;** C08F 2410/01; C08K 3/04; Y02T 10/86 (Cont.)

(86) International application number:
**PCT/KR2021/010225**

(87) International publication number:
**WO 2022/031001 (10.02.2022 Gazette 2022/06)**

(54) **MODIFIED CONJUGATED DIENE-BASED POLYMER AND RUBBER COMPOSITION COMPRISING SAME**

MODIFIZIERTES KONJUGIERTES DIENBASIERTES POLYMER UND KAUTSCHUKZUSAMMENSETZUNG DAMIT

POLYMÈRE À BASE DE DIÈNE CONJUGUÉ MODIFIÉ ET COMPOSITION DE CAOUTCHOUC LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2020 KR 20200098096**

(43) Date of publication of application:
**19.10.2022 Bulletin 2022/42**

(73) Proprietor: **LG Chem, Ltd.**
**Seoul 07336 (KR)**

(72) Inventors:
- **YOO, Suk Joon**
  **Daejeon 34122 (KR)**
- **PARK, Hyeon Jong**
  **Daejeon 34122 (KR)**
- **KIM, No Ma**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**EP-A1- 2 045 272**
**WO-A1-2015/018772**
**WO-A1-2015/065884**
**WO-A1-2020/068128**
**JP-A- 2009 227 858**
**JP-A- 2014 125 554**
**JP-A- 2014 136 758**
**KR-A- 20190 038 287**
**KR-A- 20190 128 583**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
C08K 3/04, C08L 15/00

## Description

### TECHNICAL FIELD

The present invention relates to a modified conjugated diene-based polymer having excellent rolling resistance and abrasion resistance, and a rubber composition including the same.

### BACKGROUND ART

According to the recent demand for cars having a low fuel consumption ratio, a conjugated diene-based polymer having modulational stability represented by wet skid resistance as well as low rolling resistance, and excellent abrasion resistance and tensile properties is required as a rubber material for tires.

In order to reduce the running resistance of tires, there is a method of reducing hysteresis loss of vulcanized rubber, and rebound resilience at 50°C to 80°C, tan $\delta$, Goodrich heating, or the like is used as an evaluation index of the vulcanized rubber. That is, it is desirable to use a rubber material having high rebound resilience at the above temperature or a low tan $\delta$ value or Goodrich heating.

Natural rubbers, polyisoprene rubbers, or polybutadiene rubbers are known as rubber materials having low hysteresis loss, but these rubbers have a limitation of low wet skid resistance. Thus, recently, conjugated diene-based polymers or copolymers such as styrene-butadiene rubbers (hereinafter, referred to as "SBR") and butadiene rubbers (hereinafter, referred to as "BR"), are prepared by emulsion polymerization or solution polymerization to be used as rubbers for tires. Among these polymerization methods, the greatest advantage of the solution polymerization in comparison to the emulsion polymerization is that the vinyl structure content and the styrene content, which specify physical properties of the rubber, may be arbitrarily adjusted and its molecular weight and physical properties may be controlled by coupling or modification. Thus, the SBR prepared by the solution polymerization is widely used as a rubber material for tires because it is easy to change a structure of the finally prepared SBR or BR, and movement of chain terminals may be reduced and a coupling force with a filler such as silica and carbon black may be increased by coupling or modification of the chain terminals.

The solution-polymerized SBR is prepared using an anionic polymerization initiator, and a method introducing a functional group into a terminal by coupling or modifying the chain terminal of the polymer thus formed using various modifiers is being used. For example, U.S. Patent No. 4,397,994 discloses a method of the coupling active anion of the chain terminal of a polymer obtained by polymerizing styrene-butadiene using alkyllithium which is a monofunctional initiator, in a non-polar solvent using a coupling agent such as a tin compound.

In addition, in the case of using the solution-polymerized SBR as a rubber material, the vinyl content in the SBR may increase, and physical properties required for tires such as running resistance may be controlled, but in the case where the vinyl content is high, brake performance and abrasion resistance may become unfavorable in some aspects, and accordingly, the styrene content in the SBR is required to be maintained to a certain level or more, but in this case, there are problems of not showing effects by the high vinyl content.

Accordingly, there have been attempts to improve running resistance, wet skid resistance and abrasion resistance in balance by using a block copolymer SBR including two block copolymer units having styrene and vinyl content gradients as the solution-polymerized SBR, but the improvement was just an insignificant level or there were no improving effects.

[Prior Art Documents]

(Patent Document 1) JP Laid-open Patent No. Hei 8-193147 (1996. 07. 30.)
(Patent Document 2) US 4,397,994 A (1983. 08. 09.)

### DISCLOSURE OF THE INVENTION

### TECHNICAL PROBLEM

The present invention has been devised to solve the above-mentioned problems of the conventional technique, and an object is to provide a modified conjugated diene-based polymer with high modification, which has a high molecular weight of a weight average molecular weight of 1,000,000 g/mol or more and controlled glass transition temperature and coupling number, and is capable of improving the rolling resistance and abrasion resistance if applied to a rubber composition.

In addition, an object of the present invention is to provide a rubber composition including the modified conjugated diene-based polymer and a filler, and having excellent rolling resistance and abrasion resistance.

## TECHNICAL SOLUTION

To solve the above-described tasks, according to an embodiment of the present invention, the present invention provides a modified conjugated diene-based polymer including: a derived unit from a modification initiator; a repeating unit derived from a conjugated diene-based monomer; and a derived unit from a modifier, and satisfying conditions i) to v): i) a weight average molecular weight: 1,000,000 g/mol or more, ii) a glass transition temperature: -40°C or less, iii) the N content: 70 ppm or more based on a total weight of the polymer, iv) the Si content: 70 ppm or more based on a total weight of the polymer, and v) a coupling number: greater than 2.5 and less than 5.0, wherein the modification initiator is a reaction product of a nitrogen-containing compound and an organometallic compound, and
wherein the modifier comprises an aminoalkoxysilane-based compound and an aminoepoxy-based compound.
In addition, the present invention provides a rubber composition including the modified conjugated diene-based polymer and a filler.
Further embodiments are disclosed in the dependent claims.

## ADVANTAGEOUS EFFECTS

The modified conjugated diene-based polymer according to the present invention has a weight average molecular weight of 1,000,000 g/mol or more and the N and Si contents in the polymer of 70 ppm or more in each based on the total weight of the polymer, is a highly modified with a high molecular weight, and has controlled glass transition temperature and coupling number in specific ranges in combination, thereby, if applied to a rubber composition, showing improving effects of the rolling resistance and abrasion resistance of the rubber composition.
In addition, the rubber composition according to the present invention includes the modified conjugated diene-based polymer, and accordingly, may have excellent rolling resistance and abrasion resistance.

## BEST MODE FOR CARRYING OUT THE INVENTION

Hereinafter, the present invention will be described in more detail in order to assist the understanding of the present invention.
It will be understood that words or terms used in the description and claims of the present invention shall not be interpreted as the meaning defined in commonly used dictionaries. It will be further understood that the words or terms should be interpreted as having a meaning that is consistent with their meaning of the technical idea of the invention, based on the principle that an inventor may properly define the meaning of the words or terms to best explain the invention.

### Definition

In the present disclosure, the term "polymer" refers to a polymer compound prepared by polymerizing monomers irrespective of the same or different kinds of monomers. Likewise, the general term polymer refers to a polymer prepared by only one kind of monomer and includes commonly used terms homopolymer and copolymer.
In the present disclosure, the term "derived unit", "derived repeating unit" and "derived functional group" may represent a component or a structure comes from a certain material, or the material itself.
In the present disclosure, the term "coupling number (C.N.)" represents the status of coupling or not between polymer chains in a polymer, and may represent the ratio of a polymer chain only composed of terminal modification without coupling between polymer chains and a polymer chain in which multiple polymer chains are coupled with one modifier, and accordingly, may be dependent on the number of functional groups which may be coupled with the active terminal of a polymer chain present in a modifier for modifying a polymer. Accordingly, the coupling number may have a range of $1 \leq C.N. \leq F$, where F means the number of functional groups which may react with an active polymer terminal in a modifier. A coupling number of 1 means that entire polymer chains composing a polymer are uncoupled, and a coupling number of F means that entire polymer chains are coupled.
In the present disclosure, the term "1,2-vinyl bond content" refers to the mass (or weight) percent of butadiene included in 1 and 2 positions in a polymer chain on the basis of a conjugated diene monomer (butadiene, etc.) moiety (total weight of polymerized butadiene) in the polymer.
In the present disclosure, the term "monovalent hydrocarbon group" may mean a monovalent atomic group obtained by bonding carbon and hydrogen, in a monovalent alkyl group, alkenyl group, alkynyl group, cycloalkyl group, cycloalkyl group including one or more unsaturated bonds, and aryl group. The minimum carbon number of a substituent represented by the monovalent hydrocarbon may be determined according to the type of each substituent.

In the present disclosure, the term "divalent hydrocarbon group" may mean a divalent atomic group obtained by bonding carbon and hydrogen, in a divalent alkylene group, alkenylene group, alkynylene group, cycloalkylene group, cycloalkylene group including one or more unsaturated bonds and arylene group. The minimum carbon number of a substituent represented by the divalent hydrocarbon may be determined according to the type of each substituent.

In the present disclosure, the term "alkyl group" may mean a monovalent aliphatic saturated hydrocarbon and may include both linear alkyl group such as methyl, ethyl, propyl and butyl, and branched alkyl group such as isopropyl, sec-butyl, tert-butyl and neo-pentyl.

In the present disclosure, the term "alkenyl group" may mean a monovalent aliphatic unsaturated hydrocarbon including one or two or more double bonds.

In the present disclosure, the term "alkynyl group" may mean a monovalent aliphatic unsaturated hydrocarbon including one or two or more triple bonds.

In the present disclosure, the term "alkylene group" may mean a divalent aliphatic saturated hydrocarbon such as methylene, ethylene, propylene and butylene.

In the present disclosure, the term "aryl group" may mean aromatic hydrocarbon and may include both monocyclic aromatic hydrocarbon in which one ring is formed and polycyclic aromatic hydrocarbon in which two or more rings are combined.

In the present disclosure, the term "heterocyclic group" is obtained by substituting carbon atoms in a cycloalkyl group or an aryl group with one or more heteroatoms and may mean, for example, both a heterocycloalkyl group and a heteroaryl group.

In the present disclosure, the terms "comprising", and "having" and the derivatives thereof, though these terms are particularly disclosed or not, do not intended to preclude the presence of optional additional components, steps, or processes. In order to avoid any uncertainty, all compositions claimed by using the term "comprising" may include optional additional additives, auxiliaries, or compounds, including a polymer or any other materials, unless otherwise described to the contrary. In contrast, the term "consisting essentially of ~" excludes unnecessary ones for operation and precludes optional other components, steps or processes from the scope of optional continuous description. The term "consisting of " precludes optional components, steps or processes, which are not particularly described or illustrated.

**Measurement method and conditions**

In the present disclosure, the "glass transition temperature (Tg)" is obtained as follows: a modified conjugated diene-based polymer is considered as a specimen, and based on ISO 22768:2006, a differential scanning calorimeter (product name "DSCQ100" manufactured by TA Co.) is used, nitrogen is circulated in a rate of 50 mL/min, and a 70-6DSC curve is recorded while elevating the temperature from -80°C in a rate of 10°C/min, and the peak top (inflection point) of a DSC differential curve is measured as the glass transition temperature.

In the present disclosure, a "weight average molecular weight (Mw)", a "number average molecular weight (Mn)", and "molecular weight distribution (MWD)" are measured through gel permeation chromatography (GPC) analysis and are measured by checking a molecular weight distribution curve. The molecular weight distribution (PDI, MWD, Mw/Mn) is calculated from each molecular weight measured. Particularly, the GPC uses two columns of PLgel Olexis (Polymer laboratories Co.) and one column of PLgel mixed-C (Polymer Laboratories Co.) in combination, and polystyrene (PS) is used as a GPC standard material for calculating the molecular weights, and tetrahydrofuran mixed with 2 wt% of an amine compound is used as a GPC measurement solvent.

In addition, a coupling number (C.N.) is obtained as follows: a portion of a polymer is collected before performing first modification reaction by injecting an initial modifier to obtain the peak molecular weight ($Mp_1$) of the polymer, the peak molecular weight ($Mp_2$) of a modified conjugated diene-based polymer finally modified and prepared is obtained, and calculation is performed by Mathematical Equation 1 below.

[Mathematical Equation 1]

$$\text{Coupling number (C.N.)} = Mp_2/Mp_1$$

In the present disclosure, the "1,2-vinyl bond content" is measured and analyzed using Varian VNMRS 500 MHz NMR, and the 1,2-vinyl bond content in the total polymer is calculated and measured by using 1,1,2,2-tetrachloroethane as a solvent during measuring NMR, and calculating 6.0 ppm as a solvent peak, 7.2-6.9 ppm as random styrene peaks, 6.9-6.2 ppm as block styrene peaks, 5.8-5.1 ppm as 1,4-vinyl and 1,2-vinyl peaks, and 5.1-4.5 ppm as 1,2-vinyl peaks.

In the present disclosure, the "N atom content" may be measured, for example, through an NSX analysis method, and the NSX analysis method uses a quantitative analyzer of a trace amount of nitrogen (NSX-2100H). For

example, in case of using the quantitative analyzer of a trace amount of nitrogen, the quantitative analyzer of a trace amount of nitrogen (Auto sampler, Horizontal furnace, PMT & Nitrogen detector) is turned on, carrier gas flow amounts are set to 250 ml/min for Ar, 350 ml/min for $O_2$, and 300 ml/min for ozonizer, a heater is set to 800°C, and the analyzer is stood for about 3 hours for stabilization. After stabilizing the analyzer, a calibration curve of calibration curve ranges of 5 ppm, 10 ppm, 50 ppm, 100 ppm and 500 ppm is made using Nitrogen standard (AccuStandard S-22750-01-5 ml), and an area corresponding to each concentration is obtained. Then, by using the ratios of concentrations to areas, a straight line is made. After that, a ceramic boat holding 20 mg of a specimen is put in the auto sampler of the analyzer and measurement is conducted to obtain an area. By using the area of the specimen thus obtained and the calibration curve, the N content is calculated. In this case, the specimen is a modified conjugated diene-based polymer from which solvents are removed by putting the specimen in hot water heated by steam and stirring, and may be a specimen from which remaining monomers, remaining modifiers and oil are removed.

In the present disclosure, the "Si atom content" is measured using an inductively coupled plasma optical emission spectroscopy (ICP-OES; Optima 7300DV) as an ICP analysis method. Particularly, measurement is performed by adding about 0.7 g of a specimen to a platinum (Pt) crucible, adding about 1 mL of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:

1) step 1: initial temp 0°C, rate (temp/hr) 180°C/hr, temp (holdtime) 180°C (1hr),
2) step 2: initial temp 180°C, rate (temp/hr) 85°C/hr, temp (holdtime) 370°C (2hr), and
3) step 3: initial temp 370°C, rate (temp/hr) 47°C/hr, temp (holdtime) 510°C (3hr),

adding 1 mL of concentrated nitric acid (48 wt%) and 20 μl of concentrated hydrofluoric acid (50 wt%) to a residue, sealing the platinum crucible and shaking for 30 minutes or more, adding 1 mL of boric acid to the specimen, storing at 0°C for 2 hours or more, diluting in 30 ml of ultrapure water, and performing incineration.

## Modified conjugated diene-based polymer

The present invention provides a modified conjugated diene-based polymer having physical properties in specific ranges in combination, and, if applied to a rubber composition, may improve the rolling resistance and abrasion resistance of the rubber composition.

The modified conjugated diene-based polymer according to an embodiment of the present invention is prepared by a preparation method which will be explained later, and may have a high molecular weight, be highly modified, and satisfy glass transition temperature and coupling number of specific conditions.

The modified conjugated diene-based polymer according to an embodiment of the present invention is characterized in including: a derived unit from a modification initiator; a repeating unit derived from a conjugated diene-based monomer; and a derived unit from a modifier, and satisfying the following conditions i) to v), simultaneously:

i) a weight average molecular weight: 1,000,000 g/mol or more,
ii) a glass transition temperature: -40°C or less,
iii) the N content: 70 ppm or more based on a total weight of the polymer,
iv) the Si content: 70 ppm or more based on a total weight of the polymer, and
v) a coupling number: greater than 2.5 and less than 5.0, wherein the modification initiator is a reaction product of a nitrogen-containing compound and an organometallic compound, and

wherein the modifier comprises an aminoalkoxysilane-based compound and an aminoepoxy-based compound.

The modified conjugated diene-based polymer according to an embodiment of the present invention may have a weight average molecular weight (Mw) measured by gel permeation chromatography (GPC) of 1,000,000 g/mol or more, particularly, 1,000,000 g/mol to 3,000,000 g/mol, or 1,200,000 g/mol to 2,000,000 g/mol. Within this range, excellent effects of rolling resistance and abrasion resistance may be achieved.

In addition, the modified conjugated diene-based polymer may have molecular weight distribution (PDI; MWD; Mw/Mn) of 1.0 to 3.0, particularly, 1.5 to 3.0, and within this range, tensile properties and viscoelasticity properties are excellent, and excellent balance between physical properties may be achieved.

Meanwhile, the modified conjugated diene-based polymer may have a number average molecular weight (Mn) of 500,000 g/mol to 3,000,000 g/mol, 600,000 g/mol to 2,000,000 g/mol, or 600,000 g/mol to 1,300,000 g/mol.

In another embodiment, the modified conjugated diene-based polymer has a unimodal shape molecular weight distribution curve by gel permeation chromatography (GPC), and the unimodal curve shape may be determined in view of a continuous type polymerization method, and in view of modification reaction performed by a modifier or a coupling agent.

In addition, the modified conjugated diene-based polymer satisfies the glass transition temperature of -40°C or less, particularly, -70°C to -40°C, or -60°C to -40°C. The glass transition temperature may be changed depending on the amount of the aromatic vinyl-based monomer which is a comonomer, but is not determined by only the amount of the comonomer but may be changeable according to a polymerization method and conditions. That is, the modified conjugated diene-based polymer prepared to satisfy the above-described range may have excellent affinity with a filler such as silica and carbon black during compounding with a modified conjugated diene-based polymer prepared and may have improved abrasion resistance, and within the range, the rolling resistance and abrasion resistance of a rubber composition including the same may be excellent in balance.

In addition, the modified conjugated diene-based polymer may satisfy each of the Si content and the N content of 70 ppm or more, particularly, 70 ppm to 10,000 ppm, or 100 ppm to 5,000 ppm based on the total weight of the polymer, and within these ranges, a rubber composition including the modified conjugated diene-based polymer has effects of showing excellent mechanical properties such as tensile properties and viscoelasticity properties. The Si content and the N content may mean the amount of Si atoms and the amount of N atoms, respectively, present in the modified conjugated diene-based polymer. Meanwhile, the Si atom may be derived from a functional group derived from a modifier, and the N atom may be derived from a functional group derived from a modification initiator and a modifier.

Here, the Si content and the N content may be influenced by the degree of coupling by a modifier in modification reaction and may be controlled by the amount injected of a modifier, the amount of a polar additive, the and reaction time during preparation, the mixing time and mixing degree of a modifier and an active polymer, or the like.

In addition, the modified conjugated diene-based polymer may satisfy the coupling number of greater than 2.5 and less than 5.0, particularly, 2.8 or more and less than 5.0, or 3.0 or more and 4.5 or less, and within this range, the Si content, the N content, and the weight average molecular weight may be easily controlled as described above.

In addition, the modified conjugated diene-based polymer according to an embodiment of the present invention may satisfy the 1,2-vinyl bond content of 30 wt% or less with respect to the total weight of the polymer. The vinyl content may mean the wt% of not 1,4-added but 1,2-added conjugated diene-based monomer with respect to a conjugated diene-based copolymer composed of a monomer having a vinyl group and an aromatic vinyl-based monomer, and may be influenced by the termination point of polymerization reaction during polymerization, reaction environments at the termination point of polymerization reaction, or the like.

Particularly, the 1,2-vinyl bond content may be 5 to 30 wt%, preferably, 10 to 25 wt%, and according to the 1,2-vinyl bond content, abrasion resistance and rolling resistance may be influenced. If the 1,2-vinyl bond content is greater than 30 wt%, the glass transition temperature may also be influenced, and it is apprehended that rolling resistance and wet skid resistance may be deteriorated. Thus, reaction conditions need to pay attention so that the 1,2-vinyl bond content satisfies the above-described range during preparing the modified conjugated diene-based polymer.

In the case where the modified conjugated diene-based polymer according to the present invention satisfies the above-described conditions simultaneously, mechanical properties and processability may be improved in balance, and if applied to a rubber composition, the rolling resistance and abrasion resistance of the rubber composition may be markedly improved.

Meanwhile, the modified conjugated diene-based polymer according to an embodiment of the present invention includes: a derived unit from a modification initiator; a repeating unit derived from a conjugated diene-based monomer; and a derived unit from a modifier, and here, the repeating unit derived from a conjugated diene-based monomer may mean a repeating unit formed during polymerization by a conjugated diene-based monomer, and the derived unit from a modification initiator may mean a functional group from a modification initiator present at one terminal of an active polymer which is prepared by polymerizing a conjugated diene-based monomer in the presence of a modification initiator. The derived unit from a modifier may mean a functional group derived from a modifier present at the other terminal of the active polymer through the reaction or coupling of the active polymer and a modifier.

According to an embodiment of the present invention, the conjugated diene-based monomer may be one or more selected from the group consisting of 1,3-butadiene, 2,3-dimethyl-1,3-butadiene, piperylene, 3-butyl-1,3-octadiene, isoprene, 2-phenyl-1,3-butadiene and 2-halo-1,3-butadiene (halo means a halogen atom).

In addition, the modified conjugated diene-based polymer may be a copolymer further including a repeating unit derived from an aromatic vinyl-based monomer, and in this case, may include the repeating unit derived from an aromatic vinyl monomer in 30 wt% or less, or 5 wt% to 30 wt%. Within this range, effects of excellent balance between rolling resistance and wet skid resistance may be achieved.

The aromatic vinyl monomer may be, for example, one or more selected from the group consisting of styrene, α-methylstyrene, 3-methylstyrene, 4-methylstyrene, 4-propylstyrene, 1-vinylnaphthalene, 4-cyclohexylstyrene, 4-(p-methylphenyl)styrene and 1-vinyl-5-hexylnaphthalene.

In another embodiment, the modified conjugated diene-based polymer may be a copolymer further including a repeating unit derived from a diene-based monomer of 1 to 10 carbon atoms together with the repeating unit derived from a conjugated diene-based monomer. The repeating unit derived from a diene-based monomer may be a repeating unit derived from a diene-based monomer which is different from the conjugated diene-based monomer, and the diene-based monomer which is different from the conjugated diene-based monomer may be, for example, 1,2-butadiene. If the modified conjugated diene-based polymer is a copolymer further including a diene-based monomer, the modified conjugated diene-based polymer may include the repeating unit derived from the diene-based monomer in an amount of greater than 0 wt% to 1 wt%, greater than 0 wt% to 0.1 wt%, greater than 0 wt% to 0.01 wt%, or greater than 0 wt% to 0.001 wt%, and within this range, effects of preventing gel formation may be achieved.

According to an embodiment of the present invention, the copolymer may be a random copolymer, and in this case, there are effects of excellent balance between physical properties. The random copolymer may mean a copolymer of which repeating units are arranged in disorder.

Meanwhile, in the present invention, the modification initiator is prepared by reacting a nitrogen-containing compound and an organometallic compound and may particularly be a styrene-based compound including a substituted with a substituent or unsubstituted amino group, amide group, imino group, imidazole group, pyrimidyl group or cyclic amino group in a molecule, where the substituent may be an alkyl group of 1 to 20 carbon atoms, a cycloalkyl group of 3 to 20 carbon atoms, an aryl group of 6 to 20 carbon atoms, an alkylaryl group of 7 to 20 carbon atoms, an arylalkyl group of 7 to 20 carbon atoms, or an alkoxysilyl group of 1 to 10 carbon atoms.

For example, the nitrogen-containing compound may be a compound represented by Formula 1 below.

[Formula 1]

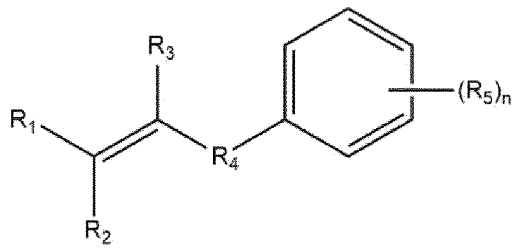

In Formula 1,

$R_1$ to $R_3$ are each independently hydrogen; an alkyl group of 1 to 30 carbon atoms; an alkenyl group of 2 to 30 carbon atoms; an alkynyl group of 2 to 30 carbon atoms; a heteroalkyl group of 1 to 30 carbon atoms, a heteroalkenyl group of 2 to 30 carbon atoms; a heteroalkynyl group of 2 to 30 carbon atoms; a cycloalkyl group of 5 to 30 carbon atoms; an aryl group of 6 to 30 carbon atoms; or a heterocyclic group of 3 to 30 carbon atoms,

$R_4$ is a single bond; a substituted with a substituent or unsubstituted alkylene group of 1 to 20 carbon atoms; a substituted with a substituent or unsubstituted cycloalkylene group of 5 to 20 carbon atoms; or a substituted with a substituent or unsubstituted arylene group of 5 to 20 carbon atoms, where the substituent is an alkyl group of 1 to 10 carbon atoms, a cycloalkyl group of 5 to 10 carbon atoms, or an aryl group of 5 to 20 carbon atoms,

$R_5$ is an alkyl group of 1 to 30 carbon atoms; an alkenyl group of 2 to 30 carbon atoms; an alkynyl group of 2 to 30 carbon atoms; a heteroalkyl group of 1 to 30 carbon atoms; a heteroalkenyl group of 2 to 30 carbon atoms; a heteroalkynyl group of 2 to 30 carbon atoms; a cycloalkyl group of 5 to 30 carbon atoms; an aryl group of 6 to 30 carbon atoms; a heterocyclic group of 3 to 30 carbon atoms; or a functional group represented by Formula 1a or Formula 1b below,

n is an integer of 1 to 5, and at least one among $R_5$ groups is a functional group represented by Formula 1a or Formula 1b below, in the case where n is an integer of 2 to 5, multiple $R_5$ groups may be the same or different from each other.

[Formula 1a]

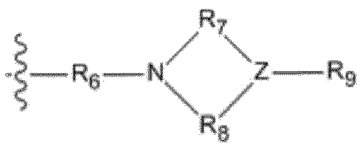

In Formula 1a,

$R_6$ is a substituted with a substituent or unsubstituted alkylene group of 1 to 20 carbon atoms; a substituted with a

substituent or unsubstituted cycloalkylene group of 5 to 20 carbon atoms; or a substituted with a substituent or unsubstituted arylene group of 5 to 20 carbon atoms, where the substituent is an alkyl group of 1 to 10 carbon atoms, a cycloalkyl group of 5 to 10 carbon atoms, or an aryl group of 5 to 20 carbon atoms,
$R_7$ and $R_8$ are each independently an alkylene group of 1 to 20 carbon atoms unsubstituted or substituted with an alkyl group of 1 to 10 carbon atoms, a cycloalkyl group of 5 to 10 carbon atoms, or an aryl group of 5 to 20 carbon atoms,
$R_9$ is hydrogen; an alkyl group of 1 to 30 carbon atoms; an alkenyl group of 2 to 30 carbon atoms; an alkynyl group of 2 to 30 carbon atoms; a heteroalkyl group of 1 to 30 carbon atoms; a heteroalkenyl group of 2 to 30 carbon atoms; a heteroalkynyl group of 2 to 30 carbon atoms; a cycloalkyl group of 5 to 30 carbon atoms; an aryl group of 6 to 30 carbon atoms; or a heterocyclic group of 3 to 30 carbon atoms, and
Z is an N, O or S atom, in the case where Z is O or S, $R_9$ is not present,

[Formula 1b]

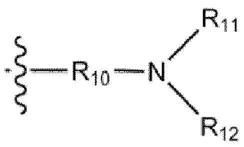

in Formula 1b,

$R_{10}$ is a substituted with a substituent or unsubstituted alkylene group of 1 to 20 carbon atoms; a substituted with a substituent or unsubstituted cycloalkylene group of 5 to 20 carbon atoms; or a substituted with a substituent or unsubstituted arylene group of 5 to 20 carbon atoms, where the substituent is an alkyl group of 1 to 10 carbon atoms, a cycloalkyl group of 5 to 10 carbon atoms, or an aryl group of 5 to 20 carbon atoms, and
$R_{11}$ and $R_{12}$ are each independently an alkyl group of 1 to 30 carbon atoms; an alkenyl group of 2 to 30 carbon atoms; an alkynyl group of 2 to 30 carbon atoms; a heteroalkyl group of 1 to 30 carbon atoms; a heteroalkenyl group of 2 to 30 carbon atoms; a heteroalkynyl group of 2 to 30 carbon atoms; a cycloalkyl group of 5 to 30 carbon atoms; an aryl group of 6 to 30 carbon atoms; or a heterocyclic group of 3 to 30 carbon atoms.

Particularly, the compound represented by Formula 1 may be the compound of Formula 1, where $R_1$ to $R_3$ are each independently hydrogen; an alkyl group of 1 to 10 carbon atoms; an alkenyl group of 2 to 10 carbon atoms; or an alkynyl group of 2 to 10 carbon atoms, $R_4$ is a single bond; an unsubstituted alkylene group of 1 to 10 carbon atoms, $R_5$ is an alkyl group of 1 to 10 carbon atoms; an alkenyl group of 2 to 10 carbon atoms; an alkynyl group of 2 to 10 carbon atoms; or a functional group represented by Formula 1a or Formula 1b below, in Formula 1a, $R_6$ is an unsubstituted alkylene group of 1 to 10 carbon atoms, $R_7$ and $R_8$ are each independently an unsubstituted alkylene group of 1 to 10 carbon atoms, $R_9$ is an alkyl group of 1 to 10 carbon atoms; a cycloalkyl group of 5 to 20 carbon atoms; an aryl group of 5 to 20 carbon atoms; or a heterocyclic group of 3 to 20 carbon atoms, and in Formula 1b, $R_{10}$ is an unsubstituted alkylene group of 1 to 10 carbon atoms, and $R_{11}$ and $R_{12}$ are each independently an alkyl group of 1 to 10 carbon atoms; a cycloalkyl group of 5 to 20 carbon atoms; an aryl group of 5 to 20 carbon atoms; or a heterocyclic group of 3 to 20 carbon atoms.
More particularly, the compound represented by Formula 1 may be a compound represented by Formula 1-1 to Formula 1-3 below.

[Formula 1-1]

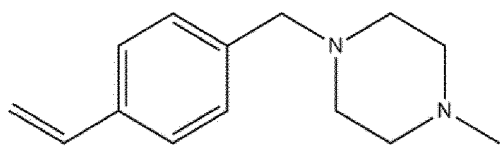

[Formula 1-2]

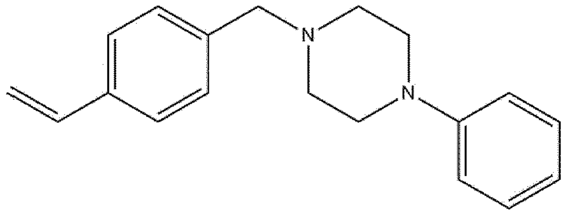

[Formula 1-3]

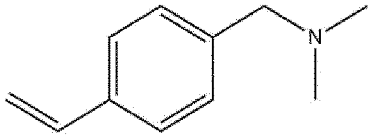

In addition, the organometallic compound may be an organic alkali metal compound, for example, may be one or more selected from the group consisting of an organolithium compound, an organosodium compound, an oragnopotassium compound, an organorubidium compound and an organocesium compound.

Particularly, the organometallic compound may be one or more selected from the group consisting of methyllithium, ethyllithium, isopropyllithium, n-butyllithium, sec-butyllithium, tert-butyllithium, n-decyllithium, tert-octyllithium, phenyllithium, 1-naphthyl lithium, n-eicosyl lithium, 4-butylphenyl lithium, 4-tolyl lithium, cyclohexyl lithium, 3,5-di-n-heptylcyclohexyl lithium and 4-cyclopentyl lithium.

In addition, in the present invention, the modifier for modifying the modified conjugated diene-based polymer may be, for example, a modifier having affinity with silica, and since the coupling number is dependent on the number of the functional groups of the modifier as described above, in order to satisfy the aforementioned range of the coupling number of the modified conjugated diene-based polymer, the modifier is required to be a compound of which number of the polymer modification functional groups which are capable of reacting with an active polymer chain is controlled.

Particularly, the derived unit from a modifier may include derived units from at least two types of modifiers, and the modifier comprises an aminoalkoxysilane-based modifier and an aminoepoxy-based modifier.

Particularly, the aminoalkoxysilane-based modifier may be a compound including 6 or more alkoxy groups in a molecule, and particularly, the aminoalkoxysilane-based modifier may be a compound including 6 to 12, more particularly, 6 to 9 alkoxy groups in a molecule, for example, one or more selected from the compounds represented by Formula 2 to Formula 4 below.

[Formula 2]

$$\left[ R_{2e} - R_{2d} \right]_b N \left[ R_{2a} - Si(OR_{2b})_a(R_{2c})_{3-a} \right]_c$$

In Formula 2,

$R_{2a}$ and $R_{2d}$ are each independently a single bond, a substituted with a substituent or unsubstituted alkylene group of 1 to 20 carbon atoms; a substituted with a substituent or unsubstituted cycloalkylene group of 5 to 20 carbon atoms; or a substituted with a substituent or unsubstituted arylene group of 6 to 20 carbon atoms, where the substituent is an alkyl group of 1 to 10 carbon atoms, a cycloalkyl group of 5 to 10 carbon atoms, or an aryl group of 6 to 20 carbon atoms,

$R_{2b}$ and $R_{2c}$ are each independently an alkyl group of 1 to 20 carbon atoms, an alkenyl group of 2 to 20 carbon atoms, an alkynyl group of 2 to 20 carbon atoms, a heteroalkyl group of 1 to 20 carbon atoms, a heteroalkenyl group of 2 to 20 carbon atoms, a heteroalkynyl group of 2 to 20 carbon atoms, a cycloalkyl group of 5 to 20 carbon atoms, or an aryl group of 6 to 20 carbon atoms, and

$R_{2e}$ is an alkyl group of 1 to 10 carbon atoms, an allyl group of 2 to 10 carbon atoms, a mono-substituted, di-substituted or tri-substituted alkylsilyl group with alkyl groups of 1 to 10 carbon atoms, a heterocyclic group of 2 to 10 carbon atoms, or $-N-[R_{2f}-Si(OR_{2g})_d(R_{2h})_{3-d}]_2$, where

$R_{2f}$ is a single bond, a substituted with a substituent or unsubstituted alkylene group of 1 to 20 carbon atoms; a

substituted with a substituent or unsubstituted cycloalkylene group of 5 to 20 carbon atoms; or a substituted with a substituent or unsubstituted arylene group of 6 to 20 carbon atoms, where the substituent is an alkyl group of 1 to 10 carbon atoms, a cycloalkyl group of 5 to 10 carbon atoms, or an aryl group of 6 to 20 carbon atoms,
$R_{2g}$ and $R_{2h}$ are each independently an alkyl group of 1 to 20 carbon atoms, an alkenyl group of 2 to 20 carbon atoms, an alkynyl group of 2 to 20 carbon atoms, a heteroalkyl group of 1 to 20 carbon atoms, a heteroalkenyl group of 2 to 20 carbon atoms, a heteroalkynyl group of 2 to 20 carbon atoms, a cycloalkyl group of 5 to 20 carbon atoms, or an aryl group of 6 to 20 carbon atoms,
d is an integer of 1 to 3,
a is an integer of 1 to 3, b is 0 or 1, and c is 2 or 3, where
in the case where b is 0, and in the case where b is 1, and $R_{2e}$ is not $-N-[R_{2f}-Si(OR_{2g})_d(R_{2b})_{3-d}]_2$, a+c is 5 or 6, and in the case where b is 1, and $R_{2e}$ is $-N-[R_{2f}-Si(OR_{2g})_d(R_{2h})_{3-d}]_2$, a+c is 4 or 5,

[Formula 3]

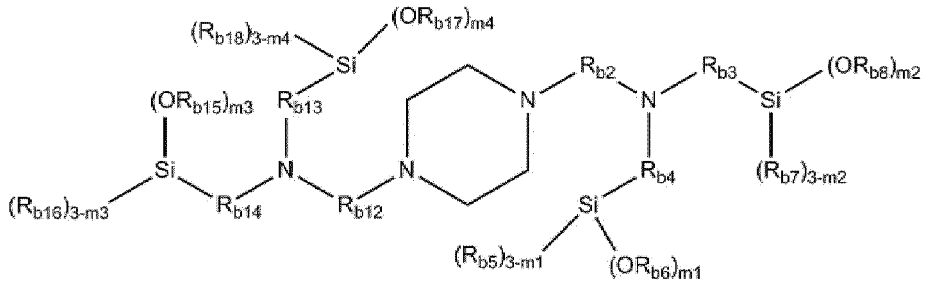

in Formula 3,

$R_{b2}$ to $R_{b4}$ are each independently an alkylene group of 1 to 10 carbon atoms,
$R_{b5}$ to $R_{b8}$ are each independently an alkyl group of 1 to 10 carbon atoms,
$R_{b12}$ to $R_{b14}$ are each independently an alkylene group of 1 to 10 carbon atoms,
$R_{b25}$ to $R_{b18}$ are each independently an alkyl group of 1 to 10 carbon atoms, and
$m_2$, $m_2$, $m_3$ and $m_4$ are each independently an integer of 1 to 3,

[Formula 4]

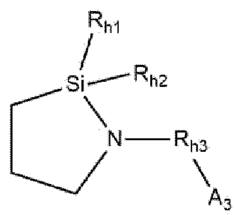

in Formula 4,

$R_{h1}$ and $R_{h2}$ are each independently an alkyl group of 1 to 10 carbon atoms or an alkoxy group of 1 to 10 carbon atoms,
$R_{h3}$ is a single bond or an alkylene group of 1 to 10 carbon atoms, and $A_3$ is $-N[Si(R_{h4}R_{h5}R_{h6})]_2$, where $R_{h4}$ to $R_{h6}$ are each independently an alkoxy group of 1 to 10 carbon atoms.

Particularly, in Formula 2, $R_{2a}$ and $R_{2d}$ may be each independently a single bond or an alkylene group of 1 to 10 carbon atoms, $R_{2b}$ and $R_{2c}$ may be each independently an alkyl group of 1 to 10 carbon atoms, a heteroalkyl group of 1 to 10 carbon atoms, a cycloalkyl group of 5 to 10 carbon atoms or an aryl group of 6 to 10 carbon atoms, and $R_{2e}$ may be an alkyl group of 1 to 10 carbon atoms, an allyl group of 2 to 10 carbon atoms, a mono-substituted, di-substituted or tri-substituted alkylsilyl group with alkyl groups of 1 to 10 carbon atoms, a heterocyclic group of 2 to 10 carbon atoms, or $-N-[R_{2f}-Si(OR_{2g})_d(R_{2h})_{3-d}]_2$, where $R_{2f}$ is a single bond, or an unsubstituted alkylene group of 1 to 10 carbon atoms, and $R_{2g}$ and $R_{2h}$ are each independently an alkyl group of 1 to 10 carbon atoms, a heteroalkyl group of 1 to 10 carbon atoms, a cycloalkyl group of 5 to 10 carbon atoms, or an aryl group of 6 to 10 carbon atoms.
In a more particular embodiment, the compound represented by Formula 2 may be one selected from the group

consisting of N,N-bis(3-(trimethoxysilyl)propyl)-methyl-1-amine, N,N-bis(3-(triethoxysilyl)propyl)-methyl-1-amine, tri(trimethoxysilyl)amine, tri-(3-(trimethoxysilyl)propyl)amine, N-(3-(1H-1,2,4-triazole-1-yl)propyl)-3-(trimethoxysilyl)-N-(3-(trimethoxysilyl)propyl)propan-1-amine, 3-(trimethoxysilyl)-N-(3-(trimethoxysilyl)propyl)-N-(3-(1-(3-(trimehtoxysilyl)propyl)-1H-1,2,4-triazol-3-yl)propyl)propan-1-amine, N,N-bis(3-(triethoxysilyl)propyl)-2,5,8,11,14-pentaoxahexadecan-16-amine, and $N^1$, $N^1$, $N^3$, $N^3$-tetrakis (3-(trimethoxysilyl)propyl)propane-1,3-diamine.

In addition, the compound represented by Formula 3 may be 3,3'-piperazine-1,4-diyl)bis(N,N-bis(3-(triethoxysilyl)propyl)propan-1-amine.

In addition, the compound represented by Formula 4 may be 3-(2,2-dimethoxy-1,2-azasilolidin-1-yl)-N,N-bis(3-(trimethoxysilyl)propyl)propan-1-amine.

In addition, the aminoepoxy-based modifier may be a compound including four or less polymer modification functional groups in a molecule, and here, the polymer modification functional group may be an epoxy group, or an epoxy group and an alkoxy group. Particularly, the aminoepoxy-based modifier may be a compound including 1 to 4 polymer modification functional groups in a molecule, for example, one or more selected from the compounds represented by Formula 5 to Formula 7 below.

[Formula 5]

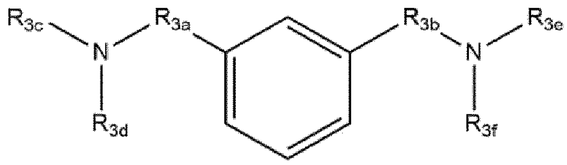

In Formula 5,

$R_{3a}$ and $R_{3b}$ are each independently an alkylene group of 1 to 10 carbon atoms, and
$R_{3c}$ to $R_{3f}$ are each independently hydrogen, an alkyl group of 1 to 10 carbon atoms or $-R_{3g}R_{3h}$, where at least one among $R_{3c}$ to $R_{3f}$ is $-R_{3g}R_{3h}$, $R_{3g}$ is a single bond or an alkylene group of 1 to 10 carbon atoms, which includes or excludes a heteroatom, and $R_{3h}$ is an alkoxysilyl group of 1 to 10 carbon atoms or an epoxy group,

[Formula 6]

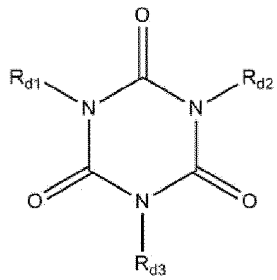

in Formula 6,

$R_{d1}$ to $R_{d3}$ are each independently hydrogen, an alkyl group of 1 to 10 carbon atoms or $-R_{d4}R_{d5}$, where at least one among $R_{d1}$ to $R_{d3}$ is $-R_{d4}R_{d5}$, $R_{d4}$ is an alkylene group of 1 to 10 carbon atoms, which includes or excludes a heteroatom, and $R_{d5}$ is an epoxy group,

[Formula 7]

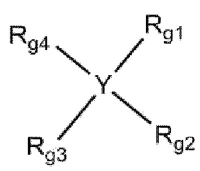

in Formula 7,

$R_{g1}$ to $R_{g4}$ are each independently hydrogen, an alkyl group of 1 to 10 carbon atoms, an alkoxy group of 1 to 10 carbon atoms, an aryl group of 6 to 12 carbon atoms or $-R_{g5}OR_{g6}$, where at least one among $R_{g1}$ to $R_{g4}$ is $-R_{g5}OR_{g6}$, $R_{g5}$ is a single bond or an alkylene group of 1 to 10 carbon atoms, and $R_{g6}$ is an epoxy group of 3 to 10 carbon atoms, and
Y is C or N, in the case where Y is N, $R_{g4}$ is not present.

Particularly, in Formula 5, $R_{3a}$ and $R_{3b}$ are each independently an alkylene group of 1 to 6 carbon atoms, and $R_{3c}$ to $R_{3f}$ may be each independently an alkyl group of 1 to 6 carbon atoms or $-R_{3g}R_{3h}$, where at least one among $R_{3c}$ to $R_{3f}$ may be $-R_{3g}R_{3h}$, $R_{3g}$ may be a single bond or an alkylene group of 1 to 6 carbon atoms, and $R_{3h}$ may be an epoxy group.

More particularly, the compound represented by Formula 5 may be a compound represented by Formula 5-1 below.

[Formula 5-1]

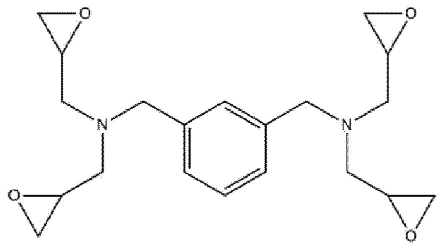

In Formula 6, $R_{d1}$ to $R_{d3}$ are each independently an alkyl group of 1 to 6 carbon atoms or $-R_{d4}R_{d5}$, where at least one among $R_{d1}$ to $R_{d3}$ may be $-R_{d4}R_{d5}$, $R_{d4}$ may be an alkylene group of 1 to 6 carbon atoms, which includes or excludes a heteroatom, $R_{d5}$ may be an epoxy group, and the heteroatom may be O (oxygen atom).

More particularly, the compound represented by Formula 6 may be a compound represented by Formula 6-1 below.

[Formula 6-1]

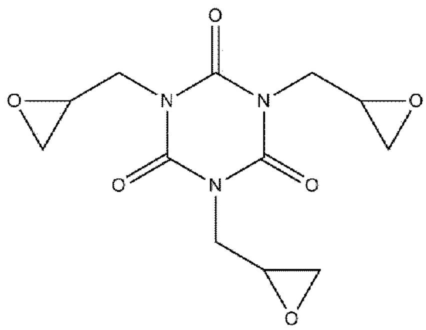

In addition, in Formula 7, $R_{g1}$ to $R_{g4}$ are each independently an alkyl group of 1 to 6 carbon atoms, an alkoxy group of 1 to 6 carbon atoms, or $-R_{g5}OR_{g6}$, where at least one among $R_{g1}$ to $R_{g4}$ may be $-R_{g5}R_{g6}$, $R_{g3}$ may be an alkylene group of 1 to 6 carbon atoms, which includes or excludes a heteroatom, $R_{g6}$ may be an epoxy group, and the heteroatom may be O.

More particularly, the compound represented by Formula 7 may be selected from the compounds represented by Formula 7-1 to Formula 7-4 below.

[Formula 7-1]

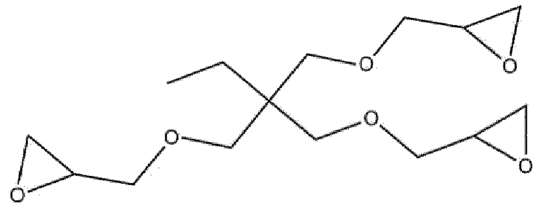

[Formula 7-2]

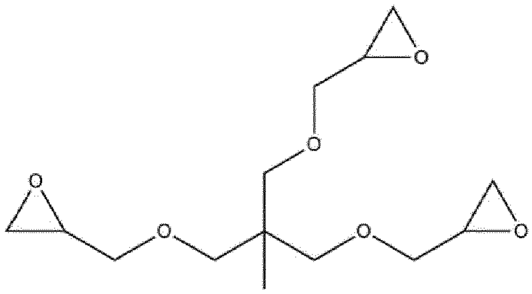

[Formula 7-3]

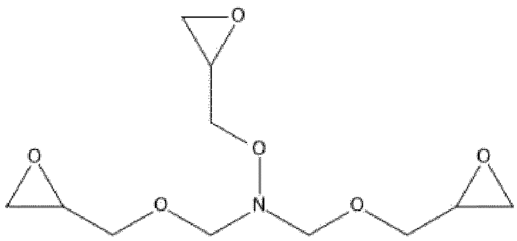

[Formula 7-4]

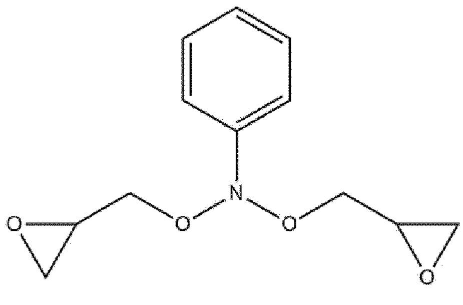

In another embodiment, the modified conjugated diene-based polymer according to an embodiment of the present invention includes a first polymer chain and a second polymer chain, including a repeating unit derived from a conjugated diene-based monomer and a derived unit from a modification initiator in each, wherein the first polymer chain includes a derived unit from an aminoalkoxysilane-based modifier in at least one terminal, the second polymer chain includes a derived unit from an aminoepoxy-based modifier in at least one terminal, and the aminoalkoxysilane-based modifier may include 6 or more alkoxy groups in a molecule.

Particularly, the first polymer chain and the second polymer chain may include a derived unit from a modification initiator a repeating unit derived from a conjugated diene-based monomer in each, the first polymer chain may include a derived unit from an aminoalkoxysilane-based modifier in at least one terminal, and the second polymer chain may include a derived unit from an aminoepoxy-based modifier in at least one terminal.

In addition, each of the first polymer chain and the second polymer chain may further include a repeating unit derived from an aromatic vinyl-based monomer, and in this case, may include the repeating unit derived from an aromatic vinyl monomer in 30 wt% or less, or 10 wt% to 25 wt%, and within this range, excellent effects of balance between rolling resistance and wet skid resistance may be achieved. In another embodiment, each of the first polymer chain and the

second polymer chain may further include a repeating unit derived from a diene-based monomer of 1 to 10 carbon atoms together with the repeating unit derived from a conjugated diene-based monomer. The repeating unit derived from a diene-based monomer may be a repeating unit derived from a diene-based monomer which is different from the conjugated diene-based monomer, and the diene-based monomer which is different from the conjugated diene-based monomer may be, for example, 1,2-butadiene.

In addition, the modified conjugated diene-based polymer includes the first polymer chain and the second polymer chain and includes a first polymer chain having a relatively higher degree of branching and a second polymer chain having a relatively lower degree of branching, and since the whole degree of branching may be suitably controlled, optimally improving effects of mechanical properties and processability may be achieved.

Particularly, the first polymer chain includes a derived unit from a nitrogen-containing modification initiator, a repeating unit derived from a conjugated diene-based monomer and a derived unit from an aminoalkoxysilane-based modifier, further includes a repeating unit derived from an aromatic vinyl-based monomer as necessary, and is prepared by reacting an active polymer prepared by polymerizing a conjugated diene-based monomer, as by the preparation method described later, with the aminoalkoxysilane-based modifier including 6 or more alkoxy groups which are polymer modification functional groups, for a certain time, thereby achieving a high degree of branching. If the modification functional groups of the aminoalkoxysilane-based modifier are less than 6 in a molecule, the coupling number of the first polymer chain may decrease, the degree of branching may be insufficiently high, and a modified conjugated diene-based polymer including the same may be hard to meet the coupling number of greater than 2.5 and less than 5.0 and may be hard to have a weight average molecular weight of 1,000,000 g/mol or more. In addition, since the number of the alkoxy groups remaining in the first polymer chain is small, the affinity of the modified conjugated diene-based polymer with a filler may be reduced, and the reduction of abrasion resistance and rolling resistance (fuel consumption properties), which are compounding properties, may be induced.

In addition, the second polymer chain includes a derived unit from a nitrogen-containing modification initiator, a repeating unit derived from a conjugated diene-based monomer and a derived unit from an aminoepoxy-based modifier, further includes a repeating unit derived from an aromatic vinyl-based monomer, as necessary, and is prepared by reacting an unmodified active polymer after modification reaction with the aminoalkoxysilane-based modifier as in the preparation method described later, with an aminoepoxy-based modifier having 4 or less epoxy groups, or epoxy groups and alkoxy groups, which are modification functional groups, in a molecule, thereby achieving a relatively lower degree of branching and high linearity. If the modification functional group of the aminoepoxy-based modifier is greater than 4, the aminoepoxy-based modifier is dominant in competition reaction with the aminoalkoxysilane-based modifier, and as a result, the abrasion resistance and rolling resistance of the modified conjugated diene-based polymer are degraded, and processability, abrasion resistance and rolling resistance may not be excellent in balance. For example, according to an embodiment of the present invention, the modified conjugated diene-based polymer may be prepared by modification reaction using two types of modifiers having different numbers of functional groups having reaction activity with an active polymer in order, and may include a first polymer chain which is modified from a modifier having a relatively greater number of functional groups and has a higher degree of branching, and a second polymer chain which is modified from a modifier having a relatively smaller number of functional groups and has a lower degree of branching, simultaneously. By including the first polymer chain and the second polymer chain, the above-described conditions of i) to v) may be more easily satisfied, and improving effects of abrasion resistance and rolling resistance in balance may be achieved.

Meanwhile, the modified conjugated diene-based polymer according to an embodiment of the present invention may be prepared by a preparation method in which polymerization temperature, polymerization time, amounts of reactants used, or the like are controlled to satisfy the above-described weight average molecular weight, glass transition temperature, Si content, N content and coupling number.

For example, the preparation method of the modified conjugated diene-based polymer may include a step of polymerizing a conjugated diene-based monomer, or a conjugated diene-based monomer and an aromatic vinyl-based monomer in the presence of a modification initiator in a hydrocarbon solvent to prepare an active polymer (S1); a first modification reaction step of reacting the active polymer prepared in step (S1) with an aminoalkoxysilane-based modifier (S2); and a second modification reaction step of reacting with an aminoepoxy-based modifier after the first modification reaction.

Hereinafter, the features of the modified conjugated diene-based polymer thus prepared, and the monomer, modification initiator and modifier used in the reaction are overlapped with the above-description, and the explanation thereon will be omitted.

The hydrocarbon solvent is not specifically limited, but may be, for example, one or more selected from the group consisting of n-pentane, n-hexane, n-heptane, isooctane, cyclohexane, toluene, benzene and xylene.

According to an embodiment of the present invention, the modification initiator may be used in 0.01 mmol to 10 mmol, 0.05 mmol to 5 mmol, 0.1 mmol to 2 mmol, 0.1 mmol to 1 mmol, or 0.15 to 0.8 mmol based on total 100 g of the monomer.

The polymerization of step (S1) may be, for example, an anionic polymerization, and particularly, a living anionic

polymerization by which an anionic active part is formed at the polymer terminal through a propagation reaction by anions. In addition, the polymerization of step (S1) may be a polymerization with heating, an isothermal polymerization, or a polymerization at a constant temperature (adiabatic polymerization). The polymerization at a constant temperature may mean a polymerization method including a step of polymerizing using self-generated heat of reaction without optionally applying heat after adding an initiator, and the polymerization with heating may mean a polymerization method including injecting the initiator and then, increasing the temperature by optionally applying heat. The isothermal polymerization may mean a polymerization method by which the temperature of a polymer is kept constant by increasing heat by applying heat or taking heat after adding the modification initiator.

In addition, according to an embodiment of the present invention, the polymerization of step (S1) may be performed by further including a diene-based compound of 1 to 10 carbon atoms in addition to the conjugated diene-based monomer, and in this case, effects of preventing the formation of gel on the wall of a reactor during operation for a long time may be achieved. The diene-based compound may be, for example, 1,2-butadiene.

The polymerization of step (S1) may be performed in a temperature range of 100°C or less, 50°C to 100°C, or 50°C to 80°C. Within the range, the conversion ratio of the polymerization reaction may increase, and the weight average molecular weight of the polymer may be satisfied while controlling the molecular weight distribution, and the improving effects of physical properties may be excellent.

The active polymer prepared by step (S1) may mean a polymer in which a polymer anion and an organometallic cation are combined.

According to an embodiment of the present invention, the active polymer prepared by the polymerization of step (S1) may be a random copolymer, and in this case, effects of excellent balance between each of physical properties may be achieved. The random copolymer may mean the arrangement of repeating units forming a copolymer in disorder.

Meanwhile, the polymerization of step (S1) may be performed by including a polar additive, and the polar additive may be added in a ratio of 0.001 g to 50 g, or 0.002 g to 0.1 g based on total 100 g of the monomer. In another embodiment, the polar additive may be added in a ratio of greater than 0 g to 1 g, 0.01 g to 1 g, or 0.1 g to 0.9 g based on total 100 g of the organometallic compound. In case of injecting the polar additive in the above-described range, the glass transition temperature, mooney viscosity and 1,2-vinyl bond content in the above-described ranges may be satisfied.

The polar additive may be, for example, one or more selected from the group consisting of tetrahydrofuran, ditetrahydrofurylpropane, diethyl ether, cyclopentyl ether, dipropyl ether, ethylene methyl ether, ethylene dimethyl ether, diethyl glycol, dimethyl ether, tert-butoxy ethoxy ethane, bis(2-dimethylaminoethyl)ether, (dimethylaminoethyl) ethyl ether, trimethylamine, triethylamine, tripropylamine, and tetramethylethylenediamine, and may preferably be triethylamine, or tetramethylethylenediamine. If the polar additive is included, and if a conjugated diene-based monomer, or a conjugated diene-based monomer and an aromatic vinyl-based monomer are copolymerized, the difference of reaction rates therebetween may be compensated, and effects of inducing easy formation of a random copolymer may be achieved.

In addition, step (S2) is a first modification reaction step for reacting the active polymer with an aminoalkoxysilane-based modifier for firstly modifying the active polymer, and may be performed by reacting the active polymer with the aminoalkoxysilane-based modifier.

In addition, the first modification reaction step may be performed to modify 10 wt% to 90 wt% of the total weight of the active polymer.

Here, the modification degree of the active polymer may be controlled by the ratio of the aminoalkoxysilane-based modifier against the active polymer and by the temperature and reaction time during the first modification reaction, and particularly, by using the aminoalkoxysilane-based modifier in 0.05 mmol to 0.20 mmol, or 0.10 mmol to 0.15 mmol based on total 100 g of the active polymer, 10 wt% to 90 wt% of the active polymer may be modified by the first modification reaction.

In addition, step (S3) is a step for modifying an unmodified active polymer which is not modified by the first modification reaction, and may be performed by reacting the firstly modified active polymer with an aminoepoxy-based modifier. In this case, the aminoepoxy-based modifier may be used so that the aminoalkoxy-based modifier and the aminoepoxy-based modifier have a weight ratio of 8:2 to 5:5.

## Rubber composition

According to the present invention, a rubber composition including the modified conjugated diene-based polymer is provided.

The rubber composition may include the modified conjugated diene-based polymer in an amount of 10 wt% or more, 10 wt% to 100 wt%, or 20 wt% to 90 wt%, and within this range, mechanical properties such as tensile strength and abrasion resistance are excellent, and effects of excellent balance between physical properties may be achieved.

In addition, the rubber composition may further include other rubber components as necessary in addition to the modified conjugated diene-based polymer, and in this case, the rubber component may be included in an amount

of 90 wt% or less based on the total weight of the rubber composition. In a particular embodiment, the rubber component may be included in an amount of 1 part by weight to 900 parts by weight based on 100 parts by weight of the modified conjugated diene-based polymer.

The rubber component may be, for example, natural rubber or synthetic rubber, and may particularly be natural rubber (NR) including cis-1,4-polyisoprene; modified natural rubber which is obtained by modifying or purifying common natural rubber, such as epoxidized natural rubber (ENR), deproteinized natural rubber (DPNR), and hydrogenated natural rubber; and synthetic rubber such as styrene-butadiene copolymer (SBR), polybutadiene (BR), polyisoprene (IR), butyl rubber (IIR), ethylene-propylene copolymer, polyisobutylene-co-isoprene, neoprene, poly(ethylene-co-propylene), poly(styrene-co-butadiene), poly(styrene-co-isoprene), poly(styrene-co-isoprene-co-butadiene), poly(isoprene-co-butadiene), poly(ethylene-co-propylene-co-diene), polysulfide rubber, acryl rubber, urethane rubber, silicone rubber, epichlorohydrin rubber, and halogenated butyl rubber, and any one or a mixture two or more thereof may be used.

The rubber composition may include a filler of 0.1 parts by weight to 200 parts by weight, or 10 parts by weight to 120 parts by weight based on 100 parts by weight of the modified conjugated diene-based polymer of the present invention. The filler may be, for example, a silica-based filler, particularly, wet silica (hydrated silicate), dry silica (anhydrous silicate), calcium silicate, aluminum silicate, or colloid silica. Preferably, the filler may be wet silica which has the most significant improving effect of destruction characteristics and compatible effect of wet grip. In addition, the rubber composition may further include a carbon-based filler, if needed.

In another embodiment, if silica is used as the filler, a silane coupling agent may be used together for the improvement of reinforcing and low exothermic properties. Particular examples of the silane coupling agent may include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyltetrasulfide, 3-triethoxysilylpropyl-N,N-dimethylthiocarbamoyltetrasulfide, 2-triethoxysilylethyl-N,N-dimethylthiocarbamoyltetrasulfide, 3-trimethoxysilylpropylbenzothiazolyltetrasulfide, 3-triethoxysilylpropylbenzolyltetrasulfide, 3-triethoxysilylpropylmethacrylatemonosulfide, 3-trimethoxysilylpropylmethacrylatemonosulfide, bis(3-diethoxymethylsilylpropyl)tetrasulfide, 3-mercaptopropyldimethoxymethylsilane, dimethoxymethylsilylpropyl-N,N-dimethylthiocarbamoyltetrasulfide, or dimethoxymethylsilylpropylbenzothiazolyltetrasulfide, and any one or a mixture of two or more thereof may be used. Preferably, bis(3-triethoxysilylpropyl)polysulfide or 3-trimethoxysilylpropylbenzothiazyltetrasulfide may be used in consideration of the improving effects of reinforcing properties.

In addition, in the rubber composition according to an embodiment of the present invention, since a modified conjugated diene-based polymer in which a functional group having high affinity with silica is brought in an active part is used as a rubber component, the mixing amount of the silane coupling agent may be smaller than a common case. Thus, the silane coupling agent may be used in an amount of 1 part by weight to 20 parts by weight, or 5 parts by weight to 15 parts by weight based on 100 parts by weight of silica. Within the above amount range, effects as a coupling agent may be sufficiently exhibited, and preventing effects of gelation of a rubber component may be achieved.

The rubber composition according to an embodiment of the present invention may be sulfur crosslinkable, and so may further include a vulcanizing agent. The vulcanizing agent may particularly be a sulfur powder and may be included in an amount of 0.1 parts by weight to 10 parts by weight based on 100 parts by weight of a rubber component. Within the above amount range, elasticity and strength required for a vulcanized rubber composition may be secured, and at the same time, an excellent low fuel consumption ratio may be achieved.

The rubber composition according to an embodiment of the present invention may further include various additives used in a common rubber industry in addition to the above components, particularly, a vulcanization accelerator, a process oil, a plasticizer, an antiaging agent, a scorch preventing agent, a zinc white, stearic acid, a thermosetting resin, or a thermoplastic resin.

The vulcanization accelerator may include, for example, thiazole-based compounds such as 2-mercaptobenzothiazole (M), dibenzothiazyldisulfide (DM), and N-cyclohexyl-2-benzothiazylsulfenamide (CZ), or guanidine-based compounds such as diphenylguanidine (DPG), in an amount of 0.1 parts by weight to 5 parts by weight based on 100 parts by weight of the rubber component.

The process oil acts as a softener in a rubber composition and may include, for example, a paraffin-based, naphthene-based, or aromatic compound. An aromatic process oil may be used in consideration of tensile strength and abrasion resistance, and a naphthene-based or paraffin-based process oil may be used in consideration of hysteresis loss and properties at a low temperature. The process oil may be included in an amount of 100 parts by weight or less based on 100 parts by weight of the rubber component. Within the above-described range, the deterioration of the tensile strength and low exothermic properties (low fuel consumption ratio) of the vulcanized rubber may be prevented.

The antiaging agent may include, for example, N-isopropyl-N'-phenyl-p-phenylenediamine, N-(1,3-dimethylbutyl)-N'-phenyl-p-phenylenediamine, 6-ethoxy-2,2,4-trimethyl-1,2-dihydroquinoline, or a condensate of diphenylamine and acetone at a high temperature, in an amount of 0.1 parts by weight to 6 parts by weight based on 100 parts by

weight of the rubber component.

The rubber composition according to an embodiment of the present invention may be obtained by mixing using a mixing apparatus such as a banbury mixer, a roll, and an internal mixer according to a mixing prescription. A rubber composition having low exothermic properties and good abrasion properties may be obtained by a vulcanization process after a molding process.

Therefore, the rubber composition may be useful to the manufacture of each member of a tire such as a tire tread, an under tread, a side wall, a carcass coating rubber, a belt coating rubber, a bead filler, a chafer, and a bead coating rubber, or to the manufacture of rubber products in various industries such as a vibration-proof rubber, a belt conveyor, and a hose.

Also, the present invention provides a tire manufactured using the rubber composition.

The tire may include a tire or a tire tread.

## Examples

Hereinafter, the present invention will be explained in more detail referring to embodiments. Embodiments according to the present invention may be modified into various other types, and the scope of the present invention should not be limited to the embodiments described below. The embodiments of the present invention are provided for completely explaining the present invention to a person having an average knowledge in the art.

### Example 1

Two vacuum-dried, 4 L and 250 mL, stainless steel pressure vessels were prepared. To the 4 L, first pressure vessel, 1200 g of cyclohexane, 150 g of 1,3-butadiene, and 50 g of styrene were injected to prepare a reaction solution.

To the 250 mL, second pressure vessel, 100 g of cyclohexane, 0.33 mmol of 1-methyl-4-(4-vinylbenzyl)piperazine and 0.26 mmol of tetramethylethylenediamine were injected and mixed, and 1.09 mmol of n-butyllithium was injected, followed by reacting for 10 minutes to prepare a modification initiator.

To the 4 L, pressure vessel in which the reaction solution was prepared, the modification initiator thus prepared was injected, and polymerization reaction was performed at 50°C for 2 hours. A polymerization conversion ratio was 1000.

Before injecting a modifier, a portion of a polymer was collected, and isopropyl alcohol was injected thereto, followed by drying to obtain an unmodified polymer solid content. This was used as a specimen for measuring 1,2-vinyl bond content, and molecular weight properties, before modification.

After that, 0.250 mmol of $N^1,N^1,N^3,N^3$-tetrakis(3-(trimethoxysilyl)propyl)propane-1,3-diamine was injected as a first modifier, and reaction was performed for 5 minutes, and after that, 0.125 mmol of 1,3,5-tris(oxiran-2-ylmethyl)-1,3,5-triazinane-2,4,6-trione was injected as a second modifier, and reaction was performed for 30 minutes. Then, 10 ml of 5 wt% isopropanol of IR1520 (BASF Co.) was injected to quench the reaction and to prepare a modified conjugated diene-based polymer.

### Example 2

A modified conjugated diene-based polymer was prepared by performing the same method in Example 1 except for preparing a modification initiator using 0.33 mmol of 1-phenyl-4-(4-vinylbenzyl)piperazine instead of 1-methyl-4-(4-vinylbenzyl)piperazine, in Example 1.

### Example 3

A modified conjugated diene-based polymer was prepared by performing the same method in Example 1 except for injecting 0.250 mmol of 3-(2,2-dimethoxy-1,2-azasilolidin-1-yl)-N,N-bis(3-(trimethoxysilyl)propyl)propan-1-amine instead of $N^1,N^1,N^3,N^3$-tetrakis(3-(trimethoxysilyl)propyl)propan-1,3-amine as the first modifier, and reacting, in Example 1.

### Example 4

A modified conjugated diene-based polymer was prepared by performing the same method in Example 1 except for injecting 0.250 mmol of 3,3'-(piperazine-1,4-diyl)bis(N,N-bis(3-(triethoxysilyl)propyl)propan-1-amine instead of $N^1,N^1,N^3,N^3$-tetrakis(3-(trimethoxysilyl)propyl)propan-1,3-amine as the first modifier, and reacting, in Example 1.

### Example 5

A modified conjugated diene-based polymer was prepared by performing the same method in Example 1 except

for injecting 0.125 mmol of N,N'-(1,3-phenylenebis(methylene))bis(1-(oxiran-2-yl)-N-(oxiran-2-ylmethyl)methanamine instead of 1,3,5-tris(oxiran-2-ylmethyl)-1,3,5-triazinan-2,4,6-trion as the second modifier, and reacting, in Example 1.

**Example 6**

A modified conjugated diene-based polymer was prepared by performing the same method in Example 1 except for injecting 0.125 mmol of 2-(oxiran-2-yl)-N,N-bis((oxiran-2-ylmethoxy)methyl)ethanamine instead of 1,3,5-tris(oxiran-2-ylmethyl)-1,3,5-triazinan-2,4,6-trion as the second modifier, and reacting, in Example 1.

**Example 7**

Two vacuum-dried, 4 L and 250 mL, stainless steel pressure vessels were prepared. To the 4 L, first pressure vessel, 1200 g of cyclohexane, 156 g of 1,3-butadiene, and 44 g of styrene were injected to prepare a reaction solution.
To the 250 mL, second pressure vessel, 100 g of cyclohexane, 0.33 mmol of 1-phenyl-4-(4-vinylbenzyl)piperazine and 0.29 mmol of tetramethylethylenediamine were injected and mixed, and 1.06 mmol of n-butyllithium was injected, followed by reacting for 10 minutes to prepare a modification initiator.
To the 4 L, pressure vessel in which the reaction solution was prepared, the modification initiator thus prepared was injected, and polymerization reaction was performed at 50°C for 2 hours. A polymerization conversion ratio was 100%.
Before injecting a modifier, a portion of a polymer was collected, and isopropyl alcohol was injected thereto, followed by drying to obtain an unmodified polymer solid content. This was used as a specimen for measuring 1,2-vinyl bond content, and molecular weight properties, before modification.
After that, 0.250 mmol of 3,3'-(piperazine-1,4-diyl)bis(N,N-bis(3-(triethoxysilyl)propyl)propan-1-amine was injected as a first modifier, and reaction was performed for 5 minutes, and after that, 0.125 mmol of 2-(oxiran-2-yl)-N,N-bis ((oxiran-2-ylmethoxy) methyl) ethanamine was injected as a second modifier, and reaction was performed for 30 minutes. Then, 10 ml of 5 wt% isopropanol of IR1520 (BASF Co.) was injected to quench the reaction and to prepare a modified conjugated diene-based polymer.

**Example 8**

Two vacuum-dried, 4 L and 250 mL, stainless steel pressure vessels were prepared. To the 4 L, first pressure vessel, 1200 g of cyclohexane, 167 g of 1,3-butadiene, and 33 g of styrene were injected to prepare a reaction solution.
To the 250 mL, second pressure vessel, 100 g of cyclohexane, 0.33 mmol of 1-phenyl-4-(4-vinylbenzyl)piperazine and 0.37 mmol of tetramethylethylenediamine were injected and mixed, and 1.09 mmol of n-butyllithium was injected, followed by reacting for 10 minutes to prepare a modification initiator.
To the 4 L, pressure vessel in which the reaction solution was prepared, the modification initiator thus prepared was injected, and polymerization reaction was performed at 50°C for 2 hours. A polymerization conversion ratio was 100%.
Before injecting a modifier, a portion of a polymer was collected, and isopropyl alcohol was injected thereto, followed by drying to obtain an unmodified polymer solid content. This was used as a specimen for measuring 1,2-vinyl bond content, and molecular weight properties, before modification.
After that, 0.250 mmol of $N^1,N^1,N^3,N^3$-tetrakis(3-(trimethoxysilyl)propyl)propane-1,3-diamine was injected as a first modifier, and reaction was performed for 5 minutes, and after that, 0.125 mmol of 1,3,5-tris(oxiran-2-ylmethyl)-1,3,5-triazinane-2,4,6-trione was injected as a second modifier, and reaction was performed for 30 minutes. Then, 10 ml of 5 wt% isopropanol of IR1520 (BASF Co.) was injected to quench the reaction and to prepare a modified conjugated diene-based polymer.

**Example 9**

Two vacuum-dried, 4 L and 250 mL, stainless steel pressure vessels were prepared. To the 4 L, first pressure vessel, 1200 g of cyclohexane, 187 g of 1,3-butadiene, and 13 g of styrene were injected to prepare a reaction solution.
To the 250 mL, second pressure vessel, 100 g of cyclohexane, 0.33 mmol of 1-phenyl-4-(4-vinylbenzyl)piperazine and 0.12 mmol of tetramethylethylenediamine were injected and mixed, and 1.12 mmol of n-butyllithium was injected, followed by reacting for 10 minutes to prepare a modification initiator.
To the 4 L, pressure vessel in which the reaction solution was prepared, the modification initiator thus prepared was injected, and polymerization reaction was performed at 50°C for 2 hours. A polymerization conversion ratio was 1000.
Before injecting a modifier, a portion of a polymer was collected, and isopropyl alcohol was injected thereto, followed by drying to obtain an unmodified polymer solid content. This was used as a specimen for measuring 1,2-vinyl bond content, and molecular weight properties, before modification.
After that, 0.250 mmol of 3-(2,2-dimethoxy-1,2-azasilolidine-1-yl)-N,N-bis(3-(trimethoxysilyl)propyl)propan-1-amine was injected as a first modifier, and reaction was performed for 5 minutes, and after that, 0.125 mmol of N,N'-(1,3-phenylenebis(methylene))bis(1-(oxiran-2-yl)-N-(oxiran-2-ylmethyl)methanamine was injected as a second modifier, and reaction was performed for 30 minutes. Then, 10 ml of 5 wt% isopropanol of IR1520 (BASF Co.) was injected to quench the reaction and to prepare a modified conjugated diene-based polymer.

**Comparative Example 1**

Two vacuum-dried, 4 L and 250 mL, stainless steel pressure vessels were prepared. To the 4 L, first pressure vessel, 1200 g of cyclohexane, 146 g of 1,3-butadiene, and 54 g of styrene were injected to prepare a reaction solution.

To the 250 mL, second pressure vessel, 100 g of cyclohexane, and 1.30 mmol of tetramethylethylenediamine were injected and mixed, and 1.47 mmol of n-butyllithium was injected, followed by reacting for 10 minutes to prepare a modification initiator.

To the 4 L, pressure vessel in which the reaction solution was prepared, the modification initiator thus prepared was injected, and polymerization reaction was performed at 50°C for 2 hours. A polymerization conversion ratio was 1000.

Before injecting a modifier, a portion of a polymer was collected, and isopropyl alcohol was injected thereto, followed by drying to obtain an unmodified polymer solid content. This was used as a specimen for measuring 1,2-vinyl bond content, and molecular weight properties, before modification.

After that, 0.87 mmol of N,N-diethyl-3-(trimethoxysilyl)propan-1-amine was injected as a modifier, and reaction was performed for 30 minutes.

Then, 10 ml of 5 wt% isopropanol of IR1520 (BASF Co.) was injected to quench the reaction, and drying was performed to prepare a modified conjugated diene-based polymer.

**Comparative Example 2**

Two vacuum-dried, 4 L and 250 mL, stainless steel pressure vessels were prepared. To the 4 L, first pressure vessel, 1200 g of cyclohexane, 128 g of 1,3-butadiene, and 72 g of styrene were injected to prepare a reaction solution.

To the 250 mL, second pressure vessel, 100 g of cyclohexane, and 0.30 mmol of tetramethylethylenediamine were injected and mixed, and 0.91 mmol of n-butyllithium was injected, followed by reacting for 10 minutes to prepare a modification initiator.

To the 4 L, pressure vessel in which the reaction solution was prepared, the modification initiator thus prepared was injected, and polymerization reaction was performed at 50°C for 2 hours. A polymerization conversion ratio was 100%.

Before injecting a modifier, a portion of a polymer was collected, and isopropyl alcohol was injected thereto, followed by drying to obtain an unmodified polymer solid content. This was used as a specimen for measuring 1,2-vinyl bond content, and molecular weight properties, before modification.

After that, 0.144 mmol of N,N'-(1,3-phenylenebis(methylene))bis(1-(oxiran-2-yl)-N-(oxiran-2-ylmethyl)methanamine was injected as a modifier, and reaction was performed for 30 minutes.

Then, 10 ml of 5 wt% isopropanol of IR1520 (BASF Co.) was injected to quench the reaction, and drying was performed to prepare a modified conjugated diene-based polymer.

**Comparative Example 3**

Two vacuum-dried, 4 L and 250 mL, stainless steel pressure vessels were prepared. To the 4 L, first pressure vessel, 1200 g of cyclohexane, 167 g of 1,3-butadiene, and 33 g of styrene were injected to prepare a reaction solution.

To the 250 mL, second pressure vessel, 100 g of cyclohexane, 0.33 mmol of 1-phenyl-4-(4-vinylbenzyl)piperazine and 0.43 mmol of tetramethylethylenediamine were injected and mixed, and 1.44 mmol of n-butyllithium was injected, followed by reacting for 10 minutes to prepare a modification initiator.

To the 4 L, pressure vessel in which the reaction solution was prepared, the modification initiator thus prepared was injected, and polymerization reaction was performed at 50°C for 2 hours. A polymerization conversion ratio was 100%.

Before injecting a modifier, a portion of a polymer was collected, and isopropyl alcohol was injected thereto, followed by drying to obtain an unmodified polymer solid content. This was used as a specimen for measuring 1,2-vinyl bond content, and molecular weight properties, before modification.

After that, 0.042 mmol of $N^1,N^1,N^3,N^3$-tetrakis(3-(trimethoxysilyl)propyl)propane-1,3-diamine was injected as a first modifier, and reaction was performed for 5 minutes, and after that, 0.042 mmol of $N^1,N^1,N^3,N^3$-tetrakis(3-(trimethoxysilyl)propyl)propane-1,3-diamine was injected as a second modifier, and reaction was performed for 30 minutes. Then, 10 ml of 5 wt% isopropanol of IR1520 (BASF Co.) was injected to quench the reaction and to prepare a modified conjugated diene-based polymer.

**Comparative Example 4**

Two vacuum-dried, 4 L and 250 mL, stainless steel pressure vessels were prepared. To the 4 L, first pressure vessel, 1200 g of cyclohexane, 150 g of 1,3-butadiene, and 50 g of styrene were injected to prepare a reaction solution.

To the 250 mL, second pressure vessel, 100 g of cyclohexane, 0.33 mmol of 1-phenyl-4-(4-vinylbenzyl)piperazine and 0.26 mmol of tetramethylethylenediamine were injected and mixed, and 1.09 mmol of n-butyllithium was injected, followed by reacting for 10 minutes to prepare a modification initiator.

To the 4 L, pressure vessel in which the reaction solution was prepared, the modification initiator thus prepared was injected, and polymerization reaction was performed at 50°C for 2 hours. A polymerization conversion ratio was 100%.

Before injecting a modifier, a portion of a polymer was collected, and isopropyl alcohol was injected thereto, followed by drying to obtain an unmodified polymer solid content. This was used as a specimen for measuring 1,2-vinyl bond content, and molecular weight properties, before modification.

After that, 0.187 mmol of N,N'-(1,3-phenylenebis(methylene))bis(1-(oxiran-2-yl)-N-(oxiran-2-ylmethyl)methanamine was injected as a first modifier, and reaction was performed for 5 minutes, and after that, 0.187 mmol of N,N'-(1,3-phenylenebis(methylene))bis(1-(oxiran-2-yl)-N-(oxiran-2-ylmethyl)methanamine was injected as a second modifier, and reaction was performed for 30 minutes. Then, 10 ml of 5 wt% isopropanol of IR1520 (BASF Co.) was injected to quench the reaction and to prepare a modified conjugated diene-based polymer.

**Experimental Example 1**

With respect to each of the modified conjugated diene-based polymers prepared in the Examples and Comparative Examples, the 1,2-vinyl bond content (wt%), a weight average molecular weight (Mw, $\times 10^3$ g/mol), molecular weight distribution (PDI, MWD), a glass transition temperature, the N content, the Si content and a coupling number were measured, respectively, and the results are shown in Table 1 below.

1) 1,2-vinyl bond content (wt%)

The 1,2-vinyl bond content in each polymer was measured and analyzed using Varian VNMRS 500 MHz NMR.

When measuring NMR, 1,1,2,2-tetrachloroethane was used as a solvent, and the 1,2-vinyl bond content was calculated by calculating a solvent peak as 5.97 ppm, and regarding 7.2-6.9 ppm as random styrene peaks, 6.9-6.2 ppm as block styrene peaks, 5.8-5.1 ppm as 1,4-vinyl and 1,2-vinyl peaks, and 5.1-4.5 ppm as 1,2-vinyl peaks.

2) Weight average molecular weight (Mw), number average molecular weight (Mn), molecular weight distribution (MWD) and coupling number

**[0170]** By gel permeation chromatography (GPC) analysis, the weight average molecular weight (Mw) and the number average molecular weight (Mn) were measured and the molecular weight distribution (PDI, MWD, Mw/Mn) was calculated from each molecular weight thus measured. Particularly, GPC was conducted using two columns of PLgel Olexis (Polymer Laboratories Co.) and one column of PLgel mixed-C (Polymer Laboratories Co.) in combination, and polystyrene (PS) as a GPC standard material for calculating the molecular weights. A solvent for measuring GPC was prepared by mixing tetrahydrofuran with 2 wt% of an amine compound.

In addition, the coupling number was obtained by collecting a portion of a polymer prior to injecting a modifier in each of the Examples and Comparative Examples, obtaining a peak molecular weight ($Mp_1$) of a polymer, obtaining a peak molecular weight ($Mp_2$) of each modified conjugated diene-based polymer, and calculating by the following Mathematical Equation 1:

[Mathematical Equation 1]

$$\text{Coupling number (C.N.)} = Mp_2/Mp_1$$

3) Glass transition temperature (Tg, °C)

A modified conjugated diene-based polymer was used as a specimen, and based on ISO 22768:2006, a differential scanning calorimeter (product name "DSCQ100" manufactured by TA Co.) was used, nitrogen was circulated in a rate of 50 mL/min, and a 70-6DSC curve was recorded while elevating the temperature from -80°C in a rate of 10°C/min, and the peak top (inflection point) of a DSC differential curve was measured as the glass transition temperature.

4) Si content

The Si content was measured by an ICP analysis method, which used an inductively coupled plasma optical emission spectroscopy (ICP-OES; Optima 7300DV). Particularly, measurement was performed by adding about 0.7 g of a specimen to a platinum (Pt) crucible and adding about 1 mL of concentrated sulfuric acid (98 wt%, electronic grade) thereto, heating at 300°C for 3 hours, incinerating the specimen in an electrical furnace (Thermo Scientific, Lindberg Blue M) by the following program of steps 1 to 3:

1) step 1: initial temp 0°C, rate (temp/hr) 180°C/hr, temp (holdtime) 180°C (1hr)
2) step 2: initial temp 180°C, rate (temp/hr) 85°C/hr, temp (holdtime) 370°C (2hr)
3) step 3: initial temp 370°C, rate (temp/hr) 47°C/hr, temp (holdtime) 510°C (3hr),

adding 1 mL of concentrated nitric acid (48 wt%) and 20 ul of concentrated hydrofluoric acid (50 wt%) to a residue, sealing the platinum crucible and shaking for 30 minutes or more, adding 1 mL of boric acid to the specimen, storing at 0°C for 2 hours or more, diluting in 30 mL of ultrapure water, and performing incineration.

5) N content

The N content was measured through an NSX analysis method using a quantitative analyzer of a trace amount of nitrogen (NSX-2100H). Particularly, the quantitative analyzer of a trace amount of nitrogen (Auto sampler, Horizontal furnace, PMT & Nitrogen detector) was turned on, carrier gas flow amounts were set to 250 ml/min for Ar, 350 ml/min for $O_2$, and 300 ml/min for ozonizer, a heater was set to 800°C, and the analyzer was stood for about 3 hours for stabilization. After stabilizing the analyzer, a calibration curve of calibration curve ranges of 5 ppm, 10 ppm, 50 ppm, 100 ppm and 500 ppm was made using Nitrogen standard (AccuStandard S-22750-01-5 ml), and an area corresponding to each concentration was obtained. Then, by using the ratios of concentrations to areas, a straight line was made. After that, a ceramic boat holding 20 mg of a specimen was put in the auto sampler of the analyzer and measurement was conducted to obtain an area. By using the area of the specimen thus obtained and the calibration curve, the N content was calculated.

[Table 1]

| Division | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 |
|---|---|---|---|---|---|---|---|---|---|---|---|---|---|---|
| Before modification | 1,2-vinyl bond content (wt%) | 20 | 20 | 20 | 20 | 20 | 20 | 35 | 25 | 10 | 43 | 26 | 25 | 20 |
| | Mn($X10^3$, g/mol) | 328 | 326 | 314 | 325 | 313 | 326 | 336 | 324 | 303 | 204 | 458 | 207 | 321 |
| | Mw($X10^3$, g/mol) | 474 | 472 | 452 | 476 | 452 | 480 | 497 | 466 | 442 | 289 | 757 | 302 | 483 |
| | $Mp_1$($X10^3$, g/mol) | 412 | 419 | 414 | 421 | 408 | 427 | 437 | 419 | 388 | 253 | 652 | 268 | 421 |
| | PDI | 1.44 | 1.45 | 1.44 | 1.47 | 1.44 | 1.47 | 1.48 | 1.44 | 1.46 | 1.41 | 1.66 | 1.46 | 1.50 |
| After modification | Mn($X10^3$, g/mol) | 804 | 761 | 804 | 729 | 655 | 743 | 787 | 724 | 601 | 315 | 623 | 624 | 667 |
| | Mw($X10^3$, g/mol) | 1351 | 1307 | 1298 | 1253 | 1149 | 1285 | 1322 | 1252 | 1052 | 472 | 1354 | 1584 | 1107 |
| | $Mp_2$($X10^3$, g/mol) | 1330 | 1291 | 1280 | 1240 | 1147 | 1258 | 1302 | 1241 | 1037 | 430 | 1313 | 1394 | 1098 |
| | PDI | 1.67 | 1.72 | 1.61 | 1.72 | 1.75 | 1.73 | 1.68 | 1.73 | 1.75 | 1.50 | 2.17 | 2.54 | 1.66 |
| | C.N. | 3.23 | 3.08 | 3.09 | 2.96 | 2.81 | 2.87 | 2.98 | 2.96 | 2.67 | 2.04 | 1.70 | 5.20 | 2.60 |
| | Tg(°C) | -50 | -50 | -50 | -50 | -50 | -50 | -46 | -64 | -83 | -25 | -36 | -64 | -50 |
| | Si content (ppm) | 132 | 127 | 121 | 123 | 125 | 119 | 124 | 126 | 120 | 146 | 11 | 53 | 9 |
| | N content (ppm) | 117 | 121 | 114 | 127 | 118 | 108 | 116 | 119 | 113 | 68 | 57 | 38 | 82 |

As shown in Table 1 above, it was confirmed that Examples 1 to 9 satisfied the conditions suggested in the present invention of i) to v) as follows; i) a weight average molecular weight: 1,000,000 g/mol or more, ii) a glass transition temperature: -40°C or less, iii) the N content: 70 ppm or more based on a total weight of the polymer, iv) the Si content: 70 ppm or more based on a total weight of the polymer, and v) a coupling number: greater than 2.5 and less than 5.0.

**Experimental Example 2**

In order to compare and analyze the physical properties of rubber compositions including the modified conjugated diene-based copolymers prepared in the Examples and Comparative Examples, and molded products manufactured therefrom, rolling resistance, processability properties and abrasion resistance were measured, respectively, and the results are shown in Table 3 below.

1) Preparation of rubber specimen

Compounding was performed using each of the modified conjugated diene-based polymers of the Examples and Comparative Examples as a raw material rubber under the compounding conditions shown in Table 2 below. The raw materials in Table 2 are represented by parts by weight based on 100 parts by weight of the raw material rubber.

[Table 2]

| Division | Raw material | Amount (parts by weight) |
|---|---|---|
| First stage mixing | Rubber | 100 |
| | Silica | 70 |
| | Coupling agent (X50S) | 11.2 |
| | Process oil | 37.5 |
| | Zinc white | 3 |
| | Stearic acid | 2 |
| | Antioxidant | 2 |
| | Antiaging agent | 2 |
| | wax | 1 |
| Second stage mixing | Sulfur | 1.5 |
| | Rubber accelerator | 1.75 |
| | Vulcanization accelerator | 2 |

Particularly, the rubber specimen was mixed via a first stage mixing and a second stage mixing. In the first stage mixing, a raw material rubber, silica (filler), an organic silane coupling agent (X50S, Evonik), a process oil (TDAE oil), zinc oxide (ZnO), stearic acid, an antioxidant (TMQ (RD)) (2,2,4-trimethyl-1,2-dihydroquinoline polymer), an antiaging agent (6PPD ((dimethylbutyl)-N-phenyl-phenylenediamine) and wax (Microcrystaline Wax) were mixed using a banbury mixer equipped with a temperature controlling apparatus. In this case, the initial temperature of a mixing apparatus was controlled to 70°C, and after finishing compounding, a first compound mixture was obtained at a discharge temperature of 145°C. In the second stage mixing, the first compound mixture was cooled to room temperature, and the first compound mixture, sulfur, a rubber accelerator (DPD (diphenylguanine)), and a vulcanization accelerator (CZ (N-cyclohexyl-2-benzothiazylsulfenamide)) were added to the mixing apparatus and mixed at a temperature of 100°C or less to obtain a second compound mixture. Then, via a curing process at 160°C for 20 minutes, a rubber specimen was formed.

2) Processability properties

By measuring the mooney viscosity (MV, ML 1+4, @100°C MU) of the second compound mixture obtained during 1) preparation of rubber specimen, the processability properties of each polymer were compared and analyzed. The resultant values in Table 3 below are index values based on the resultant value measured for Example 1, and the lower the value is, the better the properties are.

Particularly, by using MV-2000 (Alpha Technologies Co.) using Large Rotor at a rotor speed of 2±0.02 rpm at

100°C, each second compound mixture was stood at room temperature (23±3°C) for 30 minutes or more, and 2713 g was collected and put in a die cavity, and then, Platen was operated for 4 minutes for measurement.

3) Abrasion resistance (DIN abrasion test)

For each rubber specimen, DIN abrasion test was performed based on ASTM D5963, and DIN loss index (loss volume index : abrasion resistance index (ARIA), Method A) is shown. The resultant values in Table 3 are index values based on the resultant value measured for Example 1, and the higher the value is, the better the abrasion resistance is.

4) Rolling resistance

The viscoelasticity properties were secured by measuring viscoelasticity behavior on thermodynamic deformation at each measurement temperature (-60°C-60°C) with a frequency of 10 Hz by using a dynamic mechanical analyzer (GABO Co.) in a film tension mode and securing a tan δ value. In this case, if the tan δ value at a high temperature of 60°C decreases, hysteresis loss decreases, and rolling resistance (fuel consumption ratio) is excellent. Meanwhile, the resultant values in Table 3 are indexed based on the resultant value of Example 1, and the higher, the better.

[Table 3]

| Division | Example | | | | | | | | | Comparative Example | | | |
|---|---|---|---|---|---|---|---|---|---|---|---|---|---|
| | 1 | 2 | 3 | 4 | 5 | 6 | 7 | 8 | 9 | 1 | 2 | 3 | 4 |
| Processability (Index) | 100 | 100 | 98 | 101 | 98 | 99 | 101 | 98 | 98 | 82 | 101 | 118 | 94 |
| Abrasion resistance (Index) | 100 | 100 | 98 | 101 | 99 | 100 | 102 | 101 | 99 | 87 | 85 | 95 | 91 |
| Rolling resistance (Index) | 100 | 102 | 99 | 104 | 101 | 98 | 99 | 102 | 105 | 78 | 82 | 81 | 86 |

As shown in Table 3 above, it was confirmed that the modified conjugated diene-based polymers of Examples 1 to 9 showed excellent processability properties, abrasion resistance and rolling resistance in balance in contrast to Comparative Examples 1 to 4.

Particularly, the polymers of Example 1 to Example 9 showed uniformly excellent properties of processability, abrasion resistance and rolling resistance to equivalent levels, on the contrary, Comparative Examples 1 to 4 showed, if processability was somewhat excellent in contrast to Example 1, markedly degraded abrasion resistance and/or rolling resistance and showed, if abrasion resistance and rolling resistance were excellent to the equivalent levels, markedly degraded processability. In this case, Comparative Example 1 to Comparative Example 4 correspond to polymers unsatisfying one or more among the conditions suggested in the present invention of i) to v) .

The results mean that the modified conjugated diene-based polymer according to the present invention includes: a derived unit from a modification initiator; a repeating unit derived from a conjugated diene-based monomer; and a derived unit from a modifier, and satisfies conditions i) to v) simultaneously, thereby achieving effects of showing excellent processability, abrasion resistance and rolling resistance, uniformly.

## Claims

**1.** A modified conjugated diene-based polymer comprising: a derived unit from a modification initiator; a repeating unit derived from a conjugated diene-based monomer; and a derived unit from a modifier,

the modified conjugated diene-based polymer satisfying the following conditions i) to v):

i) a weight average molecular weight: 1,000,000 g/mol or more,
ii) a glass transition temperature: -40°C or less,
iii) the N content: 70 ppm or more based on a total weight of the polymer,
iv) the Si content: 70 ppm or more based on a total weight of the polymer, and
v) a coupling number: greater than 2.5 and less than 5.0,

wherein the modification initiator is a reaction product of a nitrogen-containing compound and an organometallic compound, and
wherein the modifier comprises an aminoalkoxysilane-based compound and an aminoepoxy-based compound,

wherein the weight average molecular weight, the glass transition temperature, the N content, the Si content and the coupling number are measured as disclosed in the specification.

**2.** The modified conjugated diene-based polymer of claim 1, wherein molecular weight distribution is 1.0 to 3.0, wherein the molecular weight distribution is measured as disclosed in the specification.

**3.** The modified conjugated diene-based polymer of claim 1, wherein the nitrogen-containing compound is a styrene-based compound comprising a substituted with a substituent or unsubstituted amino group, amide group, imino group, imidazole group, pyrimidyl group or cyclic amino group in a molecule, where the substituent is an alkyl group of 1 to 20 carbon atoms, a cycloalkyl group of 3 to 20 carbon atoms, an aryl group of 6 to 20 carbon atoms, an alkylaryl group of 7 to 20 carbon atoms, an arylalkyl group of 7 to 20 carbon atoms, or an alkoxysilyl group of 1 to 10 carbon atoms.

**4.** The modified conjugated diene-based polymer of claim 1, wherein the derived unit from a modifier comprises derived units from at least two types of modifiers.

**5.** The modified conjugated diene-based polymer of claim 1, wherein the aminoalkoxysilane-based compound comprises 6 or more alkoxy groups in a molecule.

**6.** The modified conjugated diene-based polymer of claim 1, wherein the aminoepoxy-based compound comprises 4 or less polymer modification functional groups in a molecule, and
the polymer modification functional group comprises an epoxy group, or an alkoxy group and an epoxy group.

**7.** The modified conjugated diene-based polymer of claim 1, further comprising a repeating unit derived from an aromatic vinyl-based monomer.

**8.** A rubber composition comprising the modified conjugated diene-based polymer of claim 1, and a filler.

**9.** The rubber composition of claim 8, wherein the filler is a silica-based filler or a carbon black-based filler.

**10.** The rubber composition of claim 8, comprising 100 parts by weight of the modified conjugated diene-based polymer and 0.1 parts by weight to 200 parts by weight of the filler.

## Patentansprüche

**1.** Modifiziertes Polymer auf Basis eines konjugierten Diens, umfassend: eine Einheit, die von einem Modifizierungsinitiator abgeleitet ist; eine Wiederholungseinheit, die von einem Monomer auf Basis eines konjugierten Diens abgeleitet ist; und eine Einheit, die von einem Modifizierungsmittel abgeleitet ist,

wobei das modifizierte Polymer auf Basis eines konjugierten Diens die folgenden Bedingungen i) bis v) erfüllt:

i) ein gewichtsgemitteltes Molekulargewicht: 1.000.000 g/mol oder mehr,
ii) eine Glasübergangstemperatur: -40 °C oder weniger,
iii) den N-Gehalt: 70 ppm oder mehr, bezogen auf ein Gesamtgewicht des Polymers,
iv) den Si-Gehalt: 70 ppm oder mehr, bezogen auf ein Gesamtgewicht des Polymers, und
v) eine Kupplungszahl: größer als 2,5 und kleiner als 5,0,

wobei der Modifizierungsinitiator ein Reaktionsprodukt einer stickstoffhaltigen Verbindung und einer organometallischen Verbindung ist, und
wobei das Modifizierungsmittel eine Verbindung auf Aminoalkoxysilanbasis und eine Verbindung auf Aminoepoxybasis umfasst,
wobei das gewichtsgemittelte Molekulargewicht, die Glasübergangstemperatur, der N-Gehalt, der Si-Gehalt und die Kupplungszahl wie in der Beschreibung offenbart gemessen werden.

**2.** Modifiziertes Polymer auf Basis eines konjugierten Diens nach Anspruch 1, wobei die Molekulargewichtsverteilung 1,0 bis 3,0 beträgt, wobei die Molekulargewichtsverteilung wie in der Beschreibung offenbart gemessen wird.

3. Modifiziertes Polymer auf Basis eines konjugierten Diens nach Anspruch 1, wobei die stickstoffhaltige Verbindung eine Verbindung auf Styrolbasis ist, die eine mit einem Substituenten substituierte oder unsubstituierte Aminogruppe, Amidgruppe, Iminogruppe, Imidazolgruppe, Pyrimidylgruppe oder cyclische Aminogruppe in einem Molekül umfasst, wobei der Substituent eine Alkylgruppe mit 1 bis 20 Kohlenstoffatomen, eine Cycloalkylgruppe mit 3 bis 20 Kohlenstoffatomen, eine Arylgruppe mit 6 bis 20 Kohlenstoffatomen, eine Alkylarylgruppe mit 7 bis 20 Kohlenstoffatomen, eine Arylalkylgruppe mit 7 bis 20 Kohlenstoffatomen oder eine Alkoxysilylgruppe mit 1 bis 10 Kohlenstoffatomen ist.

4. Modifiziertes Polymer auf Basis eines konjugierten Diens nach Anspruch 1, wobei die von einem Modifizierungsmittel abgeleitete Einheit Einheiten umfasst, die von mindestens zwei Arten von Modifizierungsmitteln abgeleitet sind.

5. Modifiziertes Polymer auf Basis eines konjugierten Diens nach Anspruch 1, wobei die Verbindung auf Aminoalkoxysilanbasis 6 oder mehr Alkoxygruppen in einem Molekül umfasst.

6. Modifiziertes Polymer auf Basis eines konjugierten Diens nach Anspruch 1, wobei die Verbindung auf Aminoepoxybasis 4 oder weniger funktionelle Polymermodifizierungsgruppen in einem Molekül umfasst, und
die funktionelle Polymermodifizierungsgruppe eine Epoxygruppe oder eine Alkoxygruppe und eine Epoxygruppe umfasst.

7. Modifiziertes Polymer auf Basis eines konjugierten Diens nach Anspruch 1, ferner umfassend eine Wiederholungseinheit, die von einem Monomer auf Basis eines aromatischen Vinyls abgeleitet ist.

8. Kautschukzusammensetzung, umfassend das modifizierte Polymer auf Basis eines konjugierten Diens nach Anspruch 1 und einen Füllstoff.

9. Kautschukzusammensetzung nach Anspruch 8, wobei der Füllstoff ein Füllstoff auf Siliciumdioxidbasis oder ein Füllstoff auf Rußbasis ist.

10. Kautschukzusammensetzung nach Anspruch 8, umfassend 100 Gewichtsteile des modifizierten Polymers auf Basis eines konjugierten Diens und 0,1 Gewichtsteile bis 200 Gewichtsteile des Füllstoffs.

**Revendications**

1. Polymère à base de diène conjugué modifié comprenant :

   une unité dérivée d’un initiateur de modification ;
   une unité de répétition dérivée d’un monomère à base de diène conjugué ; et
   une unité dérivée d’un agent modifiant,
   le polymère à base de diène conjugué modifié satisfaisant aux conditions de i) à v) ci-après :

      i) un poids moléculaire moyen en poids : 1 000 000 g/mol ou plus,
      ii) une température de transition vitreuse : -40°C ou moins,
      iii) la teneur en N : 70 ppm ou plus sur la base d’un poids total du polymère,
      iv) la teneur en S : 70 ppm ou plus sur la base d’un poids total du polymère, et
      v) un nombre de couplage : plus que 2,5 et moins que 5,0,

   dans lequel l’initiateur de modification est un produit de réaction d’un composé contenant un azote et un composé organométallique, et
   dans lequel l’agent modifiant comprend un composé à base d’aminoalkoxysilane et un composé à base d’aminoépoxy,
   dans lequel le poids moléculaire moyen en poids, la température de transition vitreuse, la teneur en N, la teneur en S et le nombre de couplage sont mesurés comme décrit dans la spécification.

2. Polymère à base de diène conjugué modifié selon la revendication 1, dans lequel une distribution moléculaire en poids est 1,0 à 3,0, dans lequel la distribution moléculaire en poids est mesurée comme décrit dans la spécification.

3. Polymère à base de diène conjugué modifié selon la revendication 1, dans lequel le composé contenant un azote est un composé à base de styrène comprenant un groupe amino, un groupe amide, un groupe imino, un groupe

imidazole, un groupe pyrimidyle ou un groupe cyclique amino non substitué ou substitué par un substituant dans une molécule, où le substituant est un groupe alkyle de 1 à 20 atomes de carbone, un groupe cycloalkyle de 3 à 20 atomes de carbone, un groupe aryle de 6 à 20 atomes de carbone, un groupe alkylaryle de 7 à 20 atomes de carbone, un groupe arylalkyle de 7 à 20 atomes de carbone ou un groupe alkoxysilyle de 1 à 10 atomes de carbone,

**4.** Polymère à base de diène conjugué modifié selon la revendication 1, dans lequel l'unité dérivée d'un agent modifiant comprend des unités dérivées d'au moins deux types d'agents modifiants.

**5.** Polymère à base de diène conjugué modifié selon la revendication 1, dans lequel le composé à base d'aminoalkoxysilane comprend 6 groupes alkoxy ou plus dans une molécule.

**6.** Polymère à base de diène conjugué modifié selon la revendication 1, dans lequel le composé à base d'aminoépoxy comprend 4 groupes fonctionnels de modification de polymère ou moins dans une molécule, et
le groupe fonctionnel de modification de polymère comprend un groupe époxy, ou un groupe alkoxy et un groupe époxy.

**7.** Polymère à base de diène conjugué modifié selon la revendication 1, comprenant en outre une unité de répétition dérivée d'un monomère à base de vinyle aromatique.

**8.** Composition de caoutchouc comprenant le polymère à base de diène conjugué modifié selon la revendication 1, et une charge.

**9.** Composition de caoutchouc selon la revendication 8, dans lequel la charge est une charge à base de silice ou une charge à base de noir de carbone,

**10.** Composition de caoutchouc selon la revendication 8, comprenant 100 parties en poids du polymère à base de diène conjugué modifié et 0,1 partie en poids à 200 parties en poids de la charge.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4397994 A
- JP HEI8193147 A